# EUROPÄISCHE PATENTSCHRIFT

(11) **EP 1 508 412 B1**
(45) Veröffentlichungstag und Bekanntmachung des Hinweises auf die Patenterteilung: **18.02.2009**
(21) Anmeldenummer: 04015968.3
(22) Anmeldetag: 07.07.2004
(51) Int. Cl.: B26D 5/00, B26D 7/06

(54) **Aufschnitt-Schneidemaschine**
Slicing Machine
Machine à débiter en tranches

(30) Priorität: 22.08.2003 DE 10339171
(43) Veröffentlichungstag der Anmeldung: 23.02.2005
(73) Patentinhaber: Bizerba GmbH & Co. KG, 72336 Balingen (DE)
(72) Erfinder: Müller, Eckhard, 72336 Balingen (DE)
(74) Vertreter: Regelmann, Thomas

(56) Entgegenhaltungen:
- EP-A- 0 881 045
- EP-A- 1 047 085
- AT-B- 394 152
- DE-A1- 10 025 661
- DE-A1- 10 225 845
- DE-A1- 19 643 538
- US-A- 4 813 316
- US-A- 5 313 160
- US-A- 5 862 730

## Beschreibung

Die Erfindung betrifft eine Aufschnitt-Schneidemaschine mit einem Kreismesser, einem Schlitten zur Aufnahme von Schneidgut, welcher parallel zur Schneidebene des Kreismessers verschieblich geführt ist, und einem Antriebsmotor zur Verschiebung des Schlittens, wobei in einem Servobetriebsmodus der Schlitten manuell bedienbar ist und die Bedienung durch den Antriebsmotor unterstützt ist.

Die Erfindung betrifft ferner ein Verfahren zum Betreiben einer Aufschnitt-Schneidemaschine in einem Servobetriebsmodus, mit einem Schlitten zur Aufnahme von Schneidgut, welcher parallel zur Schneidebene eines Kreismessers hin- und her verschieblich ist, wobei in dem Servobetriebsmodus die Schlittenbewegung manuell bedienbar ist und durch einen Antriebsmotor unterstützt wird.

Bei Aufschnitt-Schneidemaschinen zum Schneiden von Lebensmitteln wie Wurst und Käse ist üblicherweise ein Automatikbetrieb oder ein Handbetrieb vorgesehen. In dem Automatikbetrieb wird der Schlitten vollautomatisch auf seiner Führungsbahn hin- und her bewegt. Im Handbetrieb muß der entsprechende Kraftaufwand zur Bewegung des Schlittens und insbesondere zur Vorbeiführung des Schlittens mit dem Schneidgut an einem Kreismesser durch den Bediener aufgebracht werden. Es sind beispielsweise aus der EP 0 881 045 A2 oder der AT 394 152 B Aufschnitt-Schneidemaschinen bekannt, welche in einem halbautomatischen Modus (Servobetriebsmodus) betreibbar sind. In einem solchen Servobetriebsmodus wird der Schlitten von Hand bedient, das heißt von Hand geführt, wobei der Antriebsmotor die Schlittenbewegung unterstützt. Dadurch ist ein verringerter Kraftaufwand erforderlich.

Aus der US 5,862,730 ist ein Verfahren zum Bremsen eines Schlittens einer Lebensmittel-Schneidemaschine bekannt. Ein Sensor oder ein System von Sensoren dienen zur Detektion der Schlittenposition. Ein Mikropozessor kontrolliert eine dynamische Bremse, welche auf den Schlitten wirkt. Die Bremse wirkt auf den Schlitten in zwei oder mehr Stufen.

Davon ausgehend liegt der Erfindung die Aufgabe zugrunde, eine Aufschnitt-Schneidemaschine der eingangs genannten Art so zu verbessern, daß sich für den Bediener eine verbesserte Schlittenführung ergibt.

Diese Aufgabe wird bei der eingangs genannten Aufschnitt-Schneidemaschine durch die Merkmale des Anspruchs 1 gelöst.

Dadurch, daß die Geschwindigkeit und/oder Beschleunigung als Kenngröße des Schlittens gemessen wird, läßt sich die Unterstützung der Schlittenbewegung entsprechend steuern bzw. regeln. Es läßt sich so beispielsweise erreichen, daß beim Anfahren des Schlittens (bei kleinen Geschwindigkeiten) das Motormoment des Antriebsmotors überproportional groß ist, um so ein sanftes und ruckfreies Losfahren zu ermöglichen. Es läßt sich auch erreichen, daß die Geschwindigkeit des Schlittens auf eine maximale Geschwindigkeit begrenzt wird. Weiterhin läßt es sich verhindern, daß bei kurzem Anstoßen der Schlitten von selber zu laufen beginnt.

Durch die Anpassung der Unterstützung an eine Kenngröße der Schlittenbewegung wird dem Bediener das Gefühl eines leichtgängigen Schlittens gegeben, wobei sich ein natürliches Gefühl für das Schieben des Schlittens erreichen läßt.

Ganz besonders vorteilhaft ist es, wenn die Unterstützung abhängig ist von der Geschwindigkeit des Schlittens. Es läßt sich so insbesondere ein ruckfreies sanftes Anfahren des Schlittens erreichen. Beispielsweise läßt sich auch erreichen, daß bei Abnahme der Schlittengeschwindigkeit, wie es nach einem Anstoß des Schlittens ohne weitere manuelle Bedienung vorkommt, der Schlitten automatisch abgebremst wird.

Es ist grundsätzlich auch möglich, alternativ oder zusätzlich die Unterstützung abhängig von der Beschleunigung des Schlittens durchzuführen.

Ganz besonders vorteilhaft ist es, wenn ein Motormoment des Antriebsmotors in Abhängigkeit der mindestens einen Kenngröße der Schlittenbewegung gesteuert und/oder geregelt ist. Insbesondere wird dabei eine Bestromung des Antriebsmotors gesteuert und/oder geregelt, über die sich das entsprechende Motormoment einstellt. Die aktuelle Schlittenbewegung bestimmt dadurch über die entsprechende Kenngröße der Schlittenbewegung wie Geschwindigkeit des Schlittens die aktuelle Steuerung bzw. Regelung des Antriebsmotors. Dadurch lassen sich die verschiedenen Fälle bei der Schlittenbewegung für die Servounterstützung der Schlittenbewegung berücksichtigen; so kann das Anfahren optimal unterstützt werden und bei hohen Geschwindigkeiten kann die Geschwindigkeit des Schlittens über Begrenzung des Motorstroms berücksichtigt werden. Es läßt sich eine erhöhte Sicherheit erreichen, da beispielsweise das Durchlaufen eines Schlittens nach Anstoßen verhinderbar ist.

Insbesondere ist eine Steuerungs- und Regelungsvorrichtung zur Steuerung und/oder Regelung des Antriebsmotors vorgesehen.

Ganz besonders vorteilhaft ist es, wenn der Antriebsmotor gemäß einem vorgegebenen Unterstützungsprofil steuerbar und/oder regelbar ist. Das Unterstützungsprofil ist beispielsweise in Tabellenform oder als Funktion in der Steuerungs- und Regelungsvorrichtung gespeichert. Das Unterstützungsprofil umfaßt für bestimmte Kenngrößenbereiche wie beispielsweise Geschwindigkeitsbereiche die entsprechenden Situationen, gemäß denen der Antriebsmotor zu steuern bzw. zu regeln ist.

Insbesondere ist es vorgesehen, daß das Unterstützungsprofil ein Fahrprofil für den Schlitten für den Schlitten umfaßt. Das Fahrprofil dient dazu, den Antriebsmotor für die Fahrbewegung des Schlittens zu steuern bzw. zu regeln.

Es hat sich gezeigt, daß es vorteilhaft ist, wenn die Unterstützung der Schlittenbewegung im Servobetriebsmodus nicht-linear bezüglich der mindestens einen Kenngröße der Schlittenbewegung ist. Es können dann die unterschiedlichen Fälle während der Schlittenbewegung berücksichtigt werden; insbesondere läßt sich ein sanftes und ruckfreies Anfahren mit einem überhöhten Motormoment erreichen oder es läßt sich eine Begrenzung der Geschwindigkeit des Schlittens erreichen.

Ganz besonders vorteilhaft ist es, wenn die Unterstützung der Schlittenbewegung bei kleinen Geschwindigkeiten des Schlittens überproportional stärker ist als bei großen Geschwindigkeiten des Schlittens. Dadurch kann eben ein sanftes und ruckfreies Losfahren des Schlittens erreicht werden. Für den Bediener ergibt sich der Eindruck eines leichtgängigen Schlittens mit einem natürlichen Verfahrgefühl für den Schlitten.

Günstig ist es, wenn das Fahrprofil einen Anfahrbereich für kleine Geschwindigkeiten, einen Mittelbereich für mittlere Geschwindigkeiten und einen Begrenzungsbereich für hohe Geschwindigkeiten aufweist.

Günstigerweise ist im Anfahrbereich das Fahrprofil bezüglich der mindestens eine Kenngröße der Schlittenbewegung am steilsten. Beim Losfahren des Schlittens muß ein relativ hohes Motormoment ausgehend von einem Null-Motormoment ausgeübt werden, um eben den Schlitten zu bewegen. Wenn das Motormoment überproportional stark mit der Kenngröße, beispielsweise der Geschwindigkeit des Schlittens, anwächst, dann ergibt sich ein sanftes und ruckfreies Losfahren.

Im Begrenzungsbereich ist das Fahrprofil bezüglich der mindestens einen Kenngröße der Schlittenbewegung vorzugsweise am flachsten. Es läßt sich dadurch insbesondere eine Begrenzung der Geschwindigkeit des Schlittens erreichen, wenn entsprechend auch die Unterstützung (und damit das Motormoment bzw. die Motorbestromung) einen Grenzwert aufweist.

Die Steigung im Fahrprofil liegt im Mittelbereich vorzugsweise zwischen der Steigung im Anfahrbereich und der Steigung im Begrenzungsbereich. Im Mittelbereich kann das Unterstützungsprofil näherungsweise linear sein.

Ganz besonders vorteilhaft ist es, wenn das Motormoment auf einen maximalen Wert begrenzt ist, das heißt für die Bestromung des Motors ein maximaler Stromwert vorgesehen ist. Dadurch wiederum läßt sich die Geschwindigkeit des Schlittens auf einen maximalen Wert begrenzen, so daß für eine erhöhte Sicherheit gesorgt ist.

Es kann vorgesehen sein, daß die Stärke der Unterstützung einstellbar ist und insbesondere durch einen Bediener einstellbar ist. Dadurch kann beispielsweise die Art des Schneidguts berücksichtigt werden oder der Bediener selber; für eine kräftige Person kann die Stärke geringer eingestellt werden als für eine schwächere Person. Eine solche Einstellbarkeit kann dadurch realisiert werden, daß ein Basis-Unterstützungsprofil in Tabellenform hinterlegt ist und ein Bediener einen Faktor wählen kann. Der tatsächliche Motorstrom des Antriebsmotors bei einem bestimmten Bewegungszustand des Schlittens entspricht dann dem zugehörigen Basiswert gemäß Basis-Unterstützungsprofil multipliziert mit dem zuvor eingestellten Faktor.

Es ist auch möglich, daß das Unterstützungsprofil einstellbar ist, um beispielsweise verschiedene Sorten von zu schneidenden Lebensmitteln oder unterschiedliche Bedienerpersonen erfassen zu können.

Es kann auch vorgesehen sein, daß in einem Lernmodus durch Vorgabe der Schlittenbewegung ein Unterstützungsprofil erzeugbar ist. In einem solchen adaptiven Lernprozeß kann dann ein Bediener das von ihm gewünschte Unterstützungsprofil vorgeben, indem er eben die Schlittenbewegung vorgibt.

Ganz besonders vorteilhaft ist es, wenn bei Verlangsamung der Schlittenbewegung und/oder manueller Bremsung des Schlittens ein Bremsassistent aktivierbar ist. Um die Schlittenbewegung umzukehren, muß der Bediener den Schlitten in seiner Bewegung abbremsen und dann in die Gegenrichtung schieben. Dazu ist grundsätzlich zum einen eine Kraft notwendig, um Energie aus der Schlittenbewegung zu nehmen. Darüber hinaus muß bei aus dem Stand der Technik bekannten Aufschnitt-Schneidemaschinen mit Servounterstützung der Bediener auch das Motormoment des Antriebsmotors überwinden. Durch das erfindungsgemäße Vorsehen eines Bremsassistenten läßt sich durch den Bediener eine Schlittenumkehr mit weit weniger Kraftaufwand erreichen. Dadurch wiederum läßt sich Schneidgut in kürzeren Zeiten schneiden, da aufgrund des geringen Kraftaufwandes der Bediener den Schlitten auch schneller bewegen kann. Darüber hinaus wird die Sicherheit erhöht, da durch den Bremsassistenten gewährleistbar ist, daß der Schlitten nicht unkontrolliert auf seiner Bahnführung läuft.

Insbesondere wird der Bremsassistent bei einer negativen Beschleunigung des Schlittens, das heißt bei einer Verlangsamung der Geschwindigkeit aktiviert. Eine solche negative Beschleunigung kann durch einen Bediener verursacht sein, welcher eine Umkehrbewegung des Schlittens einleitet. Eine negative Beschleunigung tritt auch auf, wenn beispielsweise der Schlitten in eine Richtung angestoßen wird ohne weitere Bedienerführung. In diesem Fall sorgt der Bremsassistent für ein automatisches Abbremsen und insbesondere Anhalten des Schlittens, um ein unkontrolliertes Durchlaufen zu verhindern. Eine Verlangsamung der Geschwindigkeit läßt sich auf einfache Weise über eine zeitaufgelöste Wegermittlung bezüglich der Schlittenbewegung detektieren.

Bei einer Ausführungsform der erfindungsgemäßen Aufschnitt-Schneidemaschine ist es vorgesehen, daß bei aktiviertem Bremsassistenten ein Motormomentwert, welcher sich gemäß einem Unterstützungsprofil ergibt, modifiziert wird. Das Unterstützungsprofil, welches in Tabellenform abgespeichert sein kann, ordnet beispielsweise einem bestimmten Geschwindigkeitswert einen bestimmten Motormomentwert zu. Bei aktiviertem Bremsassistenten wird eben dieser für eine gegebene Geschwindigkeit vorgegebene Motormomentwert modifiziert, um eine Abbremsung des Schlittens zu erreichen. Diese Modifikation erfolgt dabei automatisch. Wenn der Bremsassistent aktiviert ist, nachdem eine Geschwindigkeitsverlangsamung detektiert wurde, dann erfolgt eine automatische Modifikation der entsprechenden Motormomentwerte, um so eine Abbremsung des Schlittens insbesondere auf die Geschwindigkeit Null zu erreichen.

Dies kann beispielsweise dadurch erreicht werden, daß der Motormomentwert, welcher sich für eine vorgegebene Geschwindigkeit gemäß dem Unterstützungsprofil ergibt, mit einem Bremsfaktor multipliziert wird. Der Bremsfaktor ist dabei kleiner Eins, um eine Geschwindigkeitsverlangsamung zu erreichen. Er kann auch negative Werte annehmen, um eben eine Abbremsung zu erreichen. Der oder die Bremsfaktoren können beispielsweise in einer Tabelle abgespeichert sein. Sie sind so gewählt, daß sich eine Abbremsung ergibt. Für eine aktuelle Geschwindigkeit wird dann bei aktiviertem Bremsassistenten ein Bremsfaktor vorgegeben, welcher zur Einstellung eines neuen Motormomentwertes führt. Es stellt sich dann eine neue Geschwindigkeit ein mit einem neuen Motormomentwert gemäß Unterstützungsprofil. Dieser neue Motormomentwert kann wiederum mit einem Bremsfaktor multipliziert werden. Dieser Vorgang erfolgt vorzugsweise so lange, bis ein vollständiger Stillstand des Schlittens erreicht ist.

Es kann vorgesehen sein, daß innerhalb eines vorgegebenen Zeitrasters eine Reihe von Bremsfaktoren vorgegeben sind. Die Bremsfaktoren bestimmen eine Bremsfunktion des Bremsassistenten. Beispielsweise wird in einem Zeitraster einer Gesamtdauer von 10 ms eine Reihe von vorgegebenen Bremsfaktoren gemäß einer Kennlinie abgelaufen, wobei die Bremsfaktoren so gewählt sind, daß eine Abbremsung mit dem Ergebnis vollständiger Stillstand des Schlittens erreicht wird.

Insbesondere umfaßt die Reihe auch negative Bremsfaktoren, um durch ein (zumindest kurzzeitiges) negatives Motormoment bezogen auf die Bewegungsrichtung des abzubremsenden Schlittens eine explizite Bremskraft zu bewirken.

Wenn ein Bediener den Schlitten bewegt, dann erfolgt dies üblicherweise bis zu dem Umkehrpunkt einer Schlittenführung, welcher von dem Bediener abgewandt ist. Bei Erreichen dieses Umkehrpunktes ist das Schneidgut vollständig durchgeschnitten. Der Bediener bewegt den Schlitten dann in die Gegenrichtung, wobei üblicherweise der Schlitten nicht zu dem anderen (vorderen) Umkehrpunkt der Schlittenführung bewegt wird, welcher dem Bediener zugewandt ist. In der Regel wird die zurückgelegte Strecke verkürzt, indem der Bediener bereits vor dem vorderen Umkehrpunkt der Schlittenführung die Bewegung umkehrt. In der Regel wird der vordere Umkehrpunkt nur dann erreicht, wenn ein breites Schneidgut von dem Schlitten aufgenommen ist. Erfindungsgemäß kann als Sicherheitsfunktion vorgesehen sein, daß der Schlitten abgebremst wird, wenn er nach Erreichen des vom Bediener abgewandten Umkehrpunktes der Schlittenführung den anderen Umkehrpunkt innerhalb eines vorgegebenen Zeitraums erreicht. Es besteht die grundsätzliche Gefahr, daß, wenn ein Schlitten vom (hinteren) Umkehrpunkt aus angestoßen wird, er zum anderen Umkehrpunkt läuft, dort einen Gegenimpuls erfährt und wieder zum vorherigen Umkehrpunkt läuft und so auf seiner Führungsbahn unkontrolliert hin- und her verfährt. Durch die erfindungsgemäße Sicherheitsfunktion wird geprüft, ob der Schlitten ausgehend von dem hinteren Umkehrpunkt den anderen Umkehrpunkt innerhalb eines vorgegebenen Zeitraums erreicht hat. Ist dies der Fall, so wird der Schlitten abgebremst, indem beispielsweise ein kurzer Bremsimpuls durch den Antriebsmotor für den Schlitten erzeugt wird, der ausreichend ist, den Schlitten so weit abzubremsen, daß sein Durchlaufen verhindert wird.

Der vorgegebene Zeitraum für das Durchlaufen zwischen den beiden Umkehrpunkten ist so bemessen, daß Zeiten innerhalb dieses Zeitraums einem unkontrollierten Durchlaufen des Schlittens entsprechen. Insbesondere wird geprüft, ob die Zeit, die der Schlitten benötigt, innerhalb dieses Zeitraums liegt. Der Zeitraum erstreckt sich vorzugsweise von der Zeit Null bis zu einer oberen Grenze. Der Zeitraum kann in der Steuerungs- und Regelungseinrichtung fest abgespeichert sein. Es ist auch möglich, diesen Zeitraum in Abhängigkeit von aktuellen Geräteparametern zu berechnen. Es ist auch möglich, die Stärke und Länge des Bremsimpulses zu berechnen oder auf abgespeicherte Daten zurückzugreifen. Beispielsweise kann der Zeitraum mit seiner oberen Grenze so vorgegeben werden, daß die entsprechende Grenzzeit diejenige Zeit ist, die der Schlitten zum Durchlaufen der Strecke zwischen den beiden Umkehrpunkten mit einer vorgegebenen Geschwindigkeit benötigt, wobei die vorgegebene Geschwindigkeit eine typische oder durchschnittliche Geschwindigkeit des Schlittens auf seiner Bahnführung sein kann.

Es ist vorteilhaft, wenn zusätzlich zum Servobetriebsmodus auch noch ein Automatikbetriebsmodus vorgesehen ist, in welchem sich der Schlitten automatisch hin- und her bewegt. Insbesondere ist zwischen Servobetriebsmodus und Automatikbetriebsmodus umschaltbar.

Es ist möglich, daß eine erfindungsgemäße Aufschnitt-Schneidemaschine nur noch einen Automatikbetriebsmodus und Servobetriebsmodus aufweist. Es muß dann nicht mehr für ein Auskuppeln des Schlittens gesorgt werden. Es ist aber auch noch möglich, daß zusätzlich ein Manuellbetriebsmodus vorgesehen ist, in dem der Schlitten rein manuell beweglich ist. Auch hier ist dann eine entsprechende Umschaltmöglichkeit zwischen Servobetriebsmodus und Manuellbetriebsmodus bzw. Automatikbetriebsmodus, Servobetriebsmodus und Manuellbetriebsmodus vorgesehen.

Ganz besonders vorteilhaft ist es, wenn ein Sensor zur Detektion der mindestens einen Schlittenbewegungs-Kenngröße vorgesehen ist. Der Sensor kann dabei direkt oder indirekt diese Kenngröße ermitteln. Beispielsweise kann über eine zeitgelöste Ortsermittlung der Schlittenposition die Geschwindigkeit und/oder die Beschleunigung des Schlittens bestimmt werden.

Besonders vorteilhaft ist es, wenn eine Wegmeßvorrichtung vorgesehen ist, über welche jede Position des Schlittens längs seiner Führungsbahn zu jedem Zeitpunkt mindestens während des Betriebs der Aufschnitt-Schneidemaschine absolut ermittelbar ist. Eine solche Aufschnitt-Schneidemaschine mit absoluter Wegpositionsbestimmung ist in der nicht-vorveröffentlichten deutschen Patentanmeldung Nr. 102 25 845.7 vom 5. Juni 2002 der gleichen Anmelderin offenbart; auf diese Anmeldung wird ausdrücklich Bezug genommen. Bei einer solchen absoluten Wegmeßvorrichtung läßt sich die Schlittenposition und damit die Schlittengeschwindigkeit oder Schlittenbeschleunigung referenzpositionsfrei mit großer Genauigkeit ermitteln-. Es läßt sich dann wiederum der Antriebsmotor gemäß einem Unterstützungsprofil ausgehend von der mindestens einen Kenngröße der Schlittenbewegung steuern bzw. regeln.

Der Erfindung liegt ferner die Aufgabe zugrunde, ein Verfahren der eingangs genannten Art bereitzustellen, bei welchem sich optimierte Bedienungsmöglichkeiten für den Bediener ergeben.

Diese Aufgabe wird bei dem eingangs genannten Verfahren durch die Merkmale des Anspruchs 29 gelöst.

Das erfindungsgemäße Verfahren weist die bereits im Zusammenhang mit der erfindungsgemäßen Aufschnitt-Schneidemaschine erläuterten Vorteile auf.

Weitere vorteilhafte Ausgestaltungen wurden ebenfalls bereits im Zusammenhang mit der erfindungsgemäßen Aufschnitt-Schneidemaschine erläutert.

Insbesondere wird der Antriebsmotor für den Schlitten gemäß einem Unterstützungsprofil gesteuert und/oder geregelt. Dadurch lassen sich die unterschiedlichen Bedingungen während der Verfahrbewegung eines Schlittens gezielt bei der Steuerung bzw. Regelung der Schlittenbewegung erfassen; insbesondere kann das Anfahrverhalten explizit eingestellt werden, um so ein ruckfreies und sanftes Anfahren zu ermöglichen.

Vorteilhaft ist es dabei, wenn das Unterstützungsprofil ein Fahrprofil aufweist. Über das Fahrprofil läßt sich die Verfahrbewegung des Schlittens steuern bzw. regeln, während sich über eine Bremsfunktion mit Kennlinie die Abbremsung des Schlittens steuern bzw. regeln läßt.

Günstig ist es, wenn die Unterstützung (das heißt das Motormoment, welches durch den Motorstrom eingestellt wird) bei kleinen Geschwindigkeiten des Schlittens überproportional stärker ist als bei großen Geschwindigkeiten des Schlittens. Dadurch wird ein sanftes und ruckfreies Anfahren ermöglicht.

Es ist vorteilhaft, wenn bei Verlangsamung des Schlittens und/oder bei Ausübung einer insbesondere manuellen Bremskraft auf den Schlitten ein Bremsassistent aktiviert wird. Dadurch ist der Kraftaufwand zur Abbremsung des Schlittens und zur Umkehrung er Schlittenbewegung verringert. Es läßt sich auch erreichen, daß bei einer Geschwindigkeitserniedrigung der Schlitten automatisch abgebremst wird, so daß beispielsweise ein unkontrolliertes Durchlaufen des Schlittens verhindert wird.

Es kann vorgesehen sein, daß bei aktiviertem Bremsassistenten zu vorgegebenen Zeitpunkten ein gemäß einem Unterstützungsprofil bei einer bestimmten Geschwindigkeit des Schlittens vorgegebenes Motormoment modifiziert wird. Das Motormoment wird dann entsprechend so modifiziert, daß eine unterstützte Abbremsung erreicht wird, um insbesondere den Kraftaufwand zur Abbremsung des Schlittens für einen Bediener zu erniedrigen.

Es kann dazu vorgesehen sein, daß das gemäß Unterstützungsprofil vorgegebene Motormoment mit einem Bremsfaktor kleiner Eins multipliziert wird, um das tatsächliche, auf den Schlitten wirkende Motormoment vorzugeben und dann entsprechend den Antriebsmotor mit einem solchen Strom zu beaufschlagen, daß sich dieses Motormoment ergibt. Der Bremsfaktor kann beispielsweise in Tabellenform vorgegeben sein.

Eine Bremsfunktion bzw. eine Kennlinie des Bremsassistenten läßt sich dadurch realisieren, daß in einem vorgegebenen Zeitraster eine Reihe von Bremsfaktoren vorgegeben werden. In einem solchen Zeitraster, welches eine bestimmte Dauer von beispielsweise 10 ms aufweist und in beispielsweise gleichmäßige Zeitschritte unterteilt ist, wird die Reihe von Bremsfaktoren abgearbeitet, um innerhalb des Zeitrasters zu den vorgegebenen Zeiten einen resultierenden Motormomentwert zu erhalten. Die Bremsfaktoren sind so gewählt, daß eine Abbremsung insbesondere auf die Geschwindigkeit Null erreicht wird.

Günstig ist es, wenn im Zeitraster zu größeren Zeiten hin die Bremsfaktoren kleiner werden und insbesondere zu größeren Zeiten hin negative Bremsfaktoren vorgegeben werden. Es wird dann ausgehend von einem Detektionszeitpunkt, an dem eine Verlangsamung der Geschwindigkeit detektiert wird, zunächst das Motormoment verringert, um den Schlitten zu verlangsamen. Zu größeren Zeiten hin wird durch negative Bremsfaktoren ein negatives Motormoment erzeugt, um kurzzeitig eben ein Gegenmotormoment zu bewirken, welches für eine Bremskraft sorgt, die den Schlitten abbremst. Die Bremsfaktoren sind so gewählt, daß die Abbremsung auf die Geschwindigkeit Null erfolgt, um so die Energie aus der Schlittenbewegung zu nehmen.

Es kann vorgesehen sein, daß bei Erhöhung der Geschwindigkeit des Schlittens bei aktiviertem Bremsassistenten eine Bremsassistent-Kennlinie in Richtung höherer Motormomente des Antriebsmotors durchlaufen wird. Eine solche Erhöhung der Geschwindigkeit des Schlittens bei aktiviertem Bremsassistenten kann dann vorliegen, wenn ein Bediener den Schlitten wieder in die andere Richtung bewegt. Wenn die Bremsassistent-Kennlinie nicht vollständig durchlaufen wird, sondern in Richtung höherer Motormomente durchlaufen wird (das bedeutet in Richtung höherer Bremsfaktoren), dann läßt sich ein sanfter Übergang zwischen Bremsen und normaler Bestromung des Antriebsmotors erreichen.

Insbesondere werden Zeitintervalle dann kleiner gewählt als bei der Bremsung des Schlittens, beispielsweise halb so groß, um so eben einen sanften Übergang zwischen Bremsfunktion und normaler Bestromung (welche dem normalen Antrieb des Schlittens entspricht) zu erreichen.

Die nachfolgende Beschreibung bevorzugter Ausführungsformen dient im Zusammenhang mit der Zeichnung der näheren Erläuterung der Erfindung. Es zeigen:
- Figur 1: eine Vorderansicht einer erfindungsgemäßen Aufschnitt-Schneidemaschine;
- Figur 2: eine Teilschnittansicht längs der Linie 2-2 gemäß Figur 1 mit einem Ausführungsbeispiel einer erfindungsgemäßen Wegmeßvorrichtung;

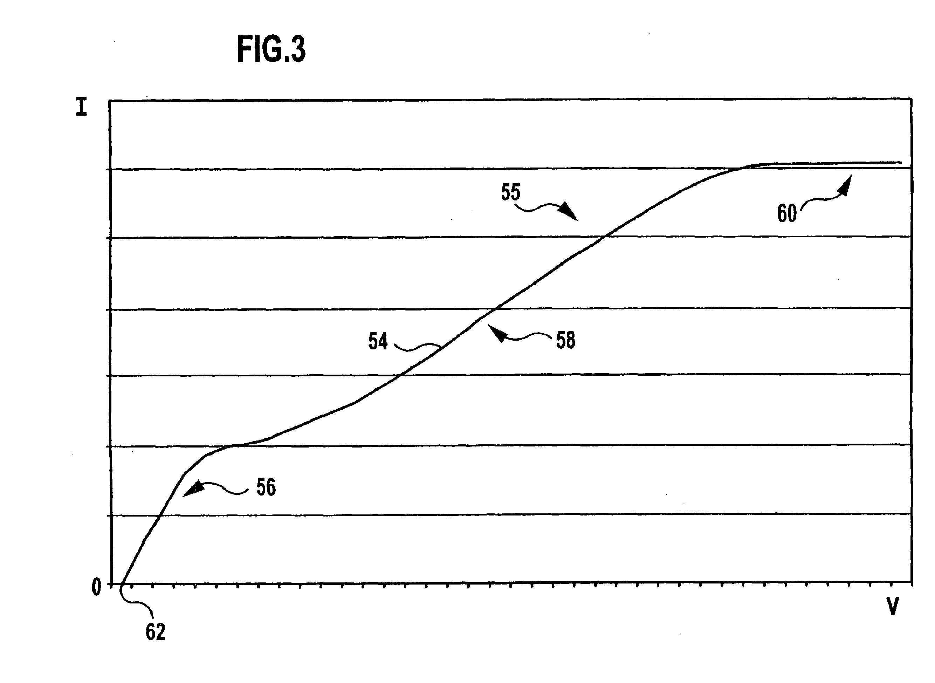

- Figur 3: ein Beispiel eines Unterstützungsprofils mit Motorstrom über Geschwindigkeit eines Schlittens;
- Figur 4: Motormoment M und sich einstellende Geschwindigkeit in ihrer Zeitabhängigkeit, und
- Figur 5: ein Diagramm von Bremsfaktoren fᵢ in einem Zeitraster t₁ bis t₁₁ für eine Bremsfunktion eines Bremsassistenten (BremsassistentKennlinie).

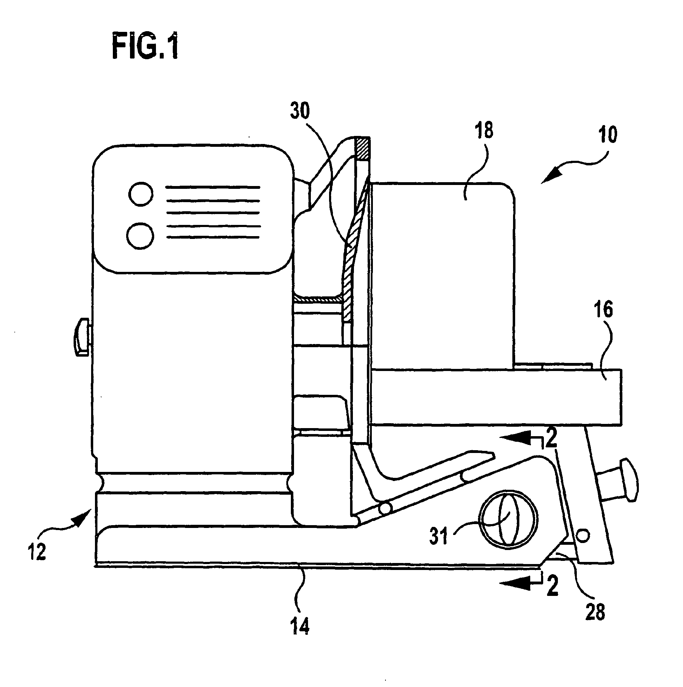

Ein Ausführungsbeispiel einer erfindungsgemäßen Aufschnitt-Schneidemaschine, welche in Figur 1 als Ganzes mit 10 bezeichnet ist, umfaßt ein als Ganzes mit 12 bezeichnetes Maschinengehäuse. Dieses weist eine Standfläche 14 auf, mit welcher die Aufschnitt-Schneidemaschine 10 auf einem Untergrund wie beispielsweise einer Tischoberfläche stellbar ist.

An dem Maschinengehäuse 12 ist auf einer Führungsbahn ein Schlitten 16 zur Aufnahme von Schneidgut zwischen zwei Umkehrpunkten hin- und her verschieblich gelagert. Dieser Schlitten 16 ist mit einer Rückwand 18 versehen, an welcher das Schneidgut, beispielsweise Wurst, Käse oder Fisch, anlegbar ist.

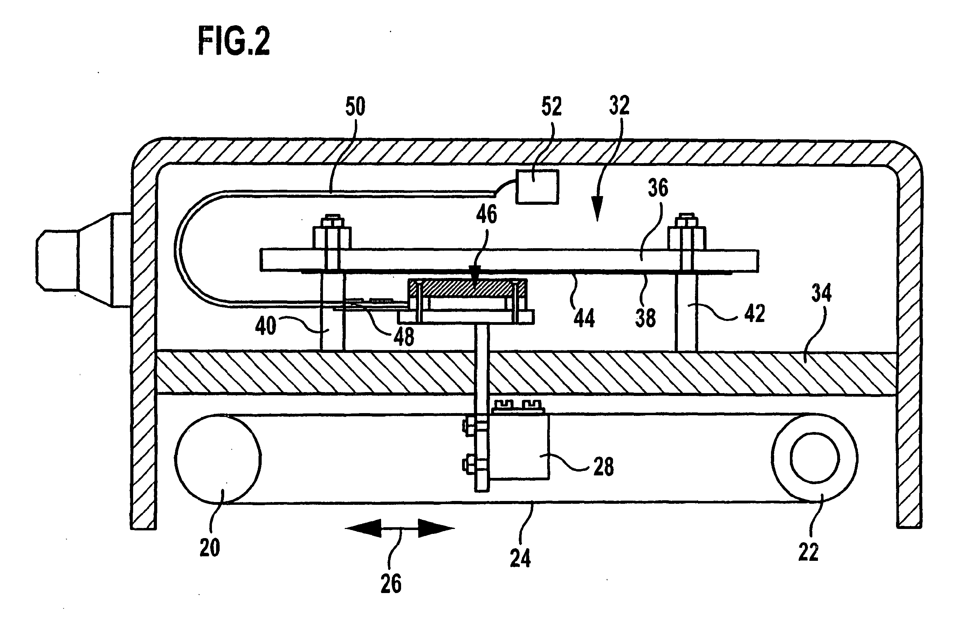

Der Schlitten 16 ist durch einen Antriebsmotor 20 (Figur 2) für seine Verschiebungsbewegung auf seiner Führungsbahn angetrieben, wobei die Hin- und Herverschiebung über den Antriebsmotor 20 automatisch erfolgt. Der Antriebsmotor 20 ist in dem Maschinengehäuse 12 geschützt angeordnet. Es ist eine halbautomatische Betriebsweise vorgesehen (Servobetriebsmodus), bei der die manuelle Bedienung der Schlittenbewegung durch den Antriebsmotor 20 unterstützt ist. Dies wird unten noch näher erläutert. In einem Automatikbetriebsmodus erfolgt eine automatische Hin- und Herverschiebung des Schlittens 12 ohne Bedienerführung. Zwischen Automatikbetriebsmodus und Servobetriebsmodus kann umgeschaltet werden.

Zusätzlich kann noch ein Manuellbetriebsmodus vorgesehen sein, in dem der Schlitten 16 nur manuell bedienbar ist.

Über den Antriebsmotor 20 wird über ein Schlittenantriebselement beispielsweise unter Zuhilfenahme einer Umlenkrolle 22 ein Zahnriemen 24 in der Verschiebungsrichtung 26 des Schlittens 16 angetrieben. Ein Schlittenfuß 28 ist an diesen Zahnriemen 24 gekoppelt und wird über die Bewegung des Zahnriemens 24 in seiner Verschiebungsrichtung 26 (Hin- und Herverschiebung) mitgenommen.

An dem Maschinengehäuse 12 ist ferner ein Kreismesser 30 angetrieben gelagert, wobei der Antriebsmotor geschützt in dem Maschinengehäuse 12 angeordnet ist (in der Zeichnung nicht gezeigt). Durch die Hin- und Herverschiebung von Schneidgut auf dem Schlitten 16 an dem rotierenden Kreismesser 30 werden von dem Schneidgut Scheiben einer einstellbaren Dicke abgeschnitten.

Die Verschiebung des Schlittens 16 erfolgt dabei parallel zu einer Schneidebene des Kreismessers 30. Diese Schneidebene kann senkrecht oder in einem Winkel zu der Standfläche 14 liegen; im letzteren Falle wird die Aufschnitt-Schneidemaschine 10 als Schrägschneider bezeichnet.

Die Aufschnitt-Schneidemaschine 10 weist insbesondere eine Messerschutzverriegelung auf (in der Zeichnung nicht gezeigt), die dann wirksam ist, wenn der Schlitten 16 zu Reinigungszwecken von dem Maschinengehäuse 12 weggeschwenkt wird oder abgezogen wird.

Es kann auch eine Schleifvorrichtung und/oder eine Reinigungsvorrichtung für das Kreismesser 30 vorgesehen sein (in der Zeichnung nicht gezeigt). Darüber hinaus kann auch eine Vorrichtung zur Ablage von in Scheiben geschnittenem Schnittgut vorhanden sein (in der Zeichnung ebenfalls nicht gezeigt).

In dem Maschinengehäuse 12 ist eine als Ganzes mit 32 bezeichnete absolute Wegmeßvorrichtung (Figur 2) angeordnet, mittels welcher sich absolut die Position des Schlittens 16 auf seiner Führungsbahn ermitteln läßt. Insbesondere läßt sich mit dieser Wegmeßvorrichtung 32 die Position des Schlittens relativ zu dem Maschinengehäuse 12 bestimmen und beispielsweise die Wegstrecke des Schlittens 16 bezogen auf einen festen Punkt des Maschinengehäuses 12. Grundsätzlich kann dabei dieser feste Punkt beliebig sein.

Bei dem in Figur 2 gezeigten Ausführungsbeispiel ist in dem Maschinengehäuse eine sich in der Verschiebungsrichtung 26 erstreckende Führungsleiste 34 angeordnet, welche zur Führung des Schlittens 16 auf seiner Führungsbahn dient. An dieser Führungsleiste 34 ist ein Träger 36 für eine Gebereinrichtung 38 der Wegmeßvorrichtung 32 gehalten. Dazu sind beabstandete Trägerdistanzstücke 40, 42 vorgesehen, an denen im Bereich seiner jeweiligen Enden der Träger 36 montiert ist.

Bei einem Ausführungsbeispiel umfaßt die Gebereinrichtung 38 als Geber ein Magnetband 44, welches auf dem Träger 36 dem Schlittenfuß 28 zugewandt angeordnet ist und insbesondere auf diesem aufgeklebt ist. Es kann auch noch vorgesehen sein, daß das Magnetband 44 im Bereich seiner Enden mit dem Träger 36 verschraubt ist.

Das Magnetband 44 umfaßt mindestens zwei im wesentlichen parallel verlaufende Spuren mit einer magnetischen Codierung. Diese Codierung ist in den Spuren aus magnetischen Segmenten unterschiedlicher Breite quer zur Verschiebungsrichtung 26 gebildet. Dadurch weist das Magnetband 44 als Geber längs der Verschiebungsrichtung 26 variierende magnetische Eigenschaften auf, welche sich entsprechend über eine Sensoreinrichtung 46 auslesen lassen. Die Sensoreinrichtung 46 umfaßt beispielsweise eine Mehrzahl (entsprechend der Anzahl der Spuren) von magnetfeldsensitiven Sensoren. Die magnetische Kopplung der Sensoreinrichtung 46 an das Magnetband 44 ist damit abhängig von der Position der Sensoren der Sensoreinrichtung 46 relativ zu dem Magnetband 44 als Geber, wodurch sich wiederum absolut die Position des Schlittens an dem Maschinengehäuse (an welchem das Magnetband 44 als Geber verschiebungsfest fixiert ist) ermitteln läßt.

Bei den Sensoren der Sensoreinrichtung 46 handelt es sich dann um magnetfeldsensitiven Sensoren, beispielsweise Hall-Sensoren, welche das lokale Magnetfeld des Magnetbandes 44 detektieren. Aufgrund der Variation des entsprechenden Feldes längs der Verschiebungsrichtung 26 läßt sich damit aus dem (analogen) Sensorsignal die Wegstrecke bezogen auf das Magnetband 44 ermitteln und damit wiederum die Position des Schlittens 16.

Dazu sind die Sensoren der Sensoreinrichtung 46 verschiebungsfest und insbesondere starr mit dem Schlittenfuß 28 verbunden, so daß bei der Hin- und Herverschiebung des Schlittens diese über das Magnetband 44 verschoben werden. Die Ortsinformation und somit die Positionsinformation für den Schlitten 16 läßt sich berührungslos ermitteln, da die Sensoren die Ortsinformation aus dem Magnetband 44, welchem sie zugewandt angeordnet sind, berührungsfrei ermitteln können. Bei der Verschiebung des Schlittens 16 gleiten die Sensoren über das Magnetband 44 als Geber beispielsweise in einem Abstand der Größenordnung 1 mm.

Geber-Sensor-Kombinationen, bei denen die Weginformation auf dem Geber magnetisch codiert ist, sind beispielsweise aus der DE 196 43 538 A1 und der EP 1 047 085 A2 bekannt, auf die hiermit ausdrücklich Bezug genommen wird.

Eine Kabelführung 48 für Versorgungskabel und Signalkabel für die Sensoreinrichtung 46 ist so ausgebildet, daß entsprechend die Kabelverbindungen mit dem Schlitten 16 bei dessen Hin und Herbewegung mitlaufen. Insbesondere erfolgt dabei die elektrische Ankopplung über ein Kabel 50, welches so beweglich verlegt ist, daß eben bei der Bewegung des Schlittenfußes 28 dieses mit seinem Anschluß an die (mitbewegten) Sensoren der Bewegung folgt.

In jeder Stellung des Schlittens 16 stehen Sensoren der Sensoreinrichtung 46 dem Magnetband 44 als Geber gegenüber, wobei die Signalbeaufschlagung der Sensoren, beispielsweise Hall-Sensoren, abhängig ist von dem Ort auf dem Magnetband 44, welchem der jeweilige Sensor gegenübersteht. Dadurch wird die Position des Schlittens 16 relativ zu dem Maschinengehäuse 12 und damit absolut über eine analoge Auswertung ermittelt. Diese Detektion der Schlittenposition erfolgt in jeder Position des Schlittens 16 und insbesondere auch zu jedem Zeitpunkt. Die entsprechenden Informationen werden an eine Steuerungs- und Regelungsvorrichtung 52 übergeben. Mit Hilfe der ermittelten Positionsdaten läßt sich dann die Aufschnitt-Schneidemaschine 10 auf vielfältige Weise steuern und regeln. Insbesondere läßt sich über die detektierten Positionsdaten der Antriebsmotor 20 steuern oder regeln, um im Automatikbetriebsmodus Bremsvorgänge einzuleiten und eine Schlittenumkehr zu bewirken.

Aufgrund der absoluten Bestimmung der Schlittenposition muß zu deren Detektion nicht von einer vorher durch den Schlitten anzufahrenden Referenzposition ausgegangen werden, sondern man erhält unabhängig von der Vorgeschichte der Schlittenbewegung bei jeder Stellung des Schlittens 16 und zu jedem Zeitpunkt dessen exakte Position, da diese jedesmal - und damit ständig - neu gemessen wird. Es läßt sich dadurch auch zu jedem Zeitpunkt der Schlittenbewegung die Geschwindigkeit des Schlittens 16 als weitere Kenngröße der Schlittenbewegung ermitteln. Es ist so auch möglich, die Beschleunigung des Schlittens zu ermitteln.

Aufgrund dieser exakten vorgeschichtsfreien Positionsbestimmung, Geschwindigkeitsbestimmung und Beschleunigungsbestimmung des Schlittens 16 ergeben sich eine Vielzahl von Steuerungsmöglichkeiten für die Aufschnitt-Schneidemaschine insbesondere bei ihrer Inbetriebnahme, während ihres Betriebs und bei der Außerbetriebnahme:

So kann insbesondere auch für den halbautomatischen Betrieb oder Manuellbetrieb der Schlitten 16 in eine für den Bediener günstige Einlegeposition für Schneidgut an dem Maschinengehäuse 12 gefahren werden. Auch bei Automatikbetrieb, bei dem der Schlitten 16 durch den Antriebsmotor 20 angetrieben ist, kann diese Grundposition so gelegt werden, daß sie beispielsweise für die Steuerung der Schlittenbewegung günstig ist.

Beispielsweise zur Steuerung der Scheibenablage von in Scheiben geschnittenem Schnittgut kann über die Steuerungs- und Regelungsvorrichtung 52 entweder intern (softwaremäßig) oder extern variabel über eine Bedienereingabe die Position einer Abschnittkante für das Schneidgut eingestellt werden. Die Abschnittkante ist dadurch definiert, daß bei ihr eine Scheibe vom Schneidgut sicher abgetrennt ist. Die Abschnittkante ist dabei unabhängig vom Durchmesser des Schneidguts. Wird diese entsprechend eingestellt, dann braucht der Schlitten nicht den vollen Weg beispielsweise bis zu einem Anschlag während der Hin- und Herbewegung zu durchfahren, so daß sich dadurch die Schneidfrequenz erhöhen läßt.

Der vordere Umkehrpunkt ist dabei abhängig vom Durchmesser des Schneidguts. Auch dieser Umkehrpunkt ist beispielsweise extern über eine Tastatureingabe variabel einstellbar. Über die Positionsbestimmung des Schlittens 16 kann die Steuervorrichtung 52 dann bei Erreichen der eingestellten Positionen die Umkehrbewegung initiieren, wobei eben die Erreichung dieser ausgezeichneten Positionen über die Wegmeßvorrichtung 32 detektiert wird.

Die Kommutierung des Antriebsmotors 20 läßt sich über die Steuerungs- und Regelungsvorrichtung 52 ebenfalls steuern, wobei eben der Steuerung bzw. Regelung die Positionsdaten zugrunde gelegt sind.

Durch die absolute und insbesondere analoge Positionsbestimmung (Wegstreckenermittlung) über die Wegmeßvorrichtung 32 muß insbesondere keine Impulszählung mehr durchgeführt werden, um die Bewegung des Schlittens 16 auf seiner Führungsbahn zu steuern.

Bei der Verwendung einer Reinigungsvorrichtung oder Schleifvorrichtung für das Kreismesser 30 läßt sich über die Steuerungs- und Regelungsvorrichtung 52 eine Inbetriebnahme dieser Vorrichtungen so steuern, daß diese nur erlaubt wird, wenn der Schlitten 16 in einer bestimmten Grundstellung weg vom Kreismesser 30 ist, so daß auf diese Weise die Betriebssicherheit erhöht ist.

Bei einer Aufschnitt-Schneidemaschine 10, welche sowohl eine Automatikbetriebsweise als auch Manuellbetriebsweise und/oder halbautomatische Betriebsweise mit einer Umschaltfunktion aufweist, läßt sich der Schlitten 16 für die Manuellbetriebsweise von dem Antriebsmotor 20 entkoppeln, indem insbesondere der Schlittenfuß 28 von dem Zahnriemen 24 entkoppelt wird, oder in den Servobetriebsmodus umschalten (halbautomatischer Betrieb).

Über die Wegmeßvorrichtung 32 läßt sich dann ermitteln, ob der Schlitten 16 überhaupt bewegt wird. Die Steuerungs- und Regelungsvorrichtung 52 kann dann bei der Nichtbewegung dafür sorgen, daß das Kreismesser 30 in seiner Rotationsbewegung abgeschaltet wird, um eben während einer Nichtbetriebsphase aus Sicherheitsgründen ein laufendes Messer zu verhindern.

Als weitere Sicherheitsfunktion ist es möglich, daß sich das Kreismesser 30 erst wieder betreiben läßt, wenn eine Schnittstärken-Einstellungseinrichtung 31 auf eine Position "Null" oder "unter Null" eingestellt wird. Die Schnittstärken-Einstellungseinrichtung 31 umfaßt insbesondere einen Drehknopf.

Über die Steuerungs- und Regelungsvorrichtung 52 läßt sich über die Bestimmung weiterer Kenngrößen der Schlittenbewegung und insbesondere der Geschwindigkeit des Schlittens 16 dann aus den Daten, welche von der Wegmeßvorrichtung 32 geliefert werden, auch die Art der Bewegung des Schlittens 16 bestimmen, das heißt beispielsweise ob dieser manuell oder automatisch bewegt wird, indem die entsprechenden Positionsdaten zeitlich aufgelöst detektiert werden. Dies läßt sich dazu verwenden, um die Schlittenbewegung gezielt zu steuern, wenn vom Manuellbetrieb in den Automatikbetrieb umgeschaltet wird. Wird beispielsweise der Schlitten 16 noch manuell bewegt, während bereits in den Automatikbetrieb umgeschaltet wurde, so darf eben durch das Zuschalten des Antriebsmotors 20 keine plötzliche Ruckbewegung des Schlittens 16 auftreten. Durch die Wegmeßvorrichtung 32 läßt sich nun aber eben feststellen, ob während des Umschaltens auf den Automatikbetrieb der Schlitten 16 noch manuell bewegt wird. Entsprechend lassen sich dann aus der von der Wegmeßvorrichtung 32 gelieferten Daten der Antriebsmotor 20 synchronisieren, um eben ein bezogen auf die manuelle Schlittenbewegung "sanftes" Anfahren der automatischen Schlittenbewegung zu erreichen.

Bei dem in Figur 2 gezeigten Ausführungsbeispiel ist der Geber 44 der Gebereinrichtung 38 stationär und die Sensoren der Sensoreinrichtung 46 sind mit dem Schlitten 16 bewegt. Es ist grundsätzlich auch möglich, daß ein oder mehrere entsprechende Sensoren stationär an dem Maschinengehäuse 12 angeordnet ist, während der oder die Geber mit dem Schlitten 16 bewegt werden. Die Anordnung ist dabei grundsätzlich wie in Figur 2 gezeigt, nur daß Gebereinrichtung und Sensoreinrichtung vertauscht sind und die stationäre Vorrichtung (die Sensoreinrichtung) mit Energie versorgt werden muß und an Signalleitungen gekoppelt ist.

Eine solche Wegmeßvorrichtung läßt sich beispielsweise dadurch ausbilden, daß der Sensor ein induktives Element, beispielsweise eine Printspule, umfaßt, welches einen variierenden Querschnitt in der Verschiebungsrichtung 26 aufweist.

Die mit dem Schlitten 16 verschiebliche Gebereinrichtung umfaßt dann einen Magneten und ist insbesondere durch einen oder mehrere Permanentmagneten gebildet; das bewegende Element der Gebereinrichtung-Sensoreinrichtung-Vorrichtung kann dann kabelfrei geführt werden.

In diesem Ausführungsbeispiel koppelt der Magnet als Geber induktiv an das induktive Element, und beispielsweise durch Bestimmung der Güte des induktiven Elementes lassen sich die entsprechenden absoluten Ortsinformationen bezüglich der Position des Schlittens 16 erhalten.

Eine entsprechende Wegmeßvorrichtung ist in der DE 100 25 661 A1 beschrieben, auf die hiermit ausdrücklich Bezug genommen wird.

Bei der Wegmeßvorrichtung 32 kann es sich auch um ein magnetorestriktives System handeln, wobei der Geber wiederum ein Magnet ist. Ein solches magnetorestriktives System ist beispielsweise in der US 5,313,160 beschrieben, auf die hiermit ausdrücklich Bezug genommen wird.

Es ist grundsätzlich auch möglich, die Position des Schlittens 16 auf seiner Führungsbahn relativ zum Maschinengehäuse 12 optisch zu ermitteln, indem beispielsweise eine Entfernungsmessung mittels eines Laserstrahls durchgeführt wird, wobei vorzugsweise die Laserquelle dann bezüglich des Maschinengehäuses 12 fixiert ist.

Neben einer berührungslosen Messung ist es auch grundsätzlich möglich, daß zur Bestimmung der absoluten Position des Schlittens 16 eine Widerstandsmessung durchgeführt wird. Dazu umfaßt die Wegmeßvorrichtung 32 beispielsweise eine Widerstandsbahn und eine Kontaktbahn, welche gegenüberliegend auf dem Träger 36 angeordnet sind. Insbesondere sind dabei die Widerstandsbahn und die Kontaktbahn folienartig ausgebildet, wobei beide Folien übereinander angeordnet sind.

An dem Schlittenfuß 28 sitzt ein Druckstift, welcher mit dem Schlitten 16 bewegt wird, wobei der Druckstift selber unverschieblich an dem Schlittenfuß 28 sitzt. Dieser Druckstift drückt die beiden Folien zusammen, was einen Kontakt der Widerstandsbahn und der Kontaktbahn bewirkt. Bei entsprechender Ausgestaltung von Widerstandsbahn und Kontaktbahn läßt sich dann ein Widerstand ermitteln, welcher abhängig ist von der Position des Schlittens 16 relativ zu dem Träger 36 und damit zu dem Maschinengehäuse 12. Beispielsweise lassen sich Widerstandsbahn und Kontaktbahn so ausgestalten, daß in Abhängigkeit von einem bestimmten maschinengehäusefesten Referenzpunkt die Widerstandsänderung bei der Hin- und Herverschiebung des Schlittens 16 auf seiner Führungsbahn linear ist (beispielsweise linear zunehmend bei Wegbewegung von diesem bestimmten Referenzpunkt und linear abnehmend bei Zubewegung auf diesen Referenzpunkt).

Es kann auch vorgesehen sein, daß der Antriebsmotor 20 über ein Schlittenantriebselement wie die Umlenkrolle 22 mit einer absoluten Winkelmeßvorrichtung gekoppelt ist, welche die Drehstellung des entsprechenden Antriebselementes, dessen Drehung in eine Linearbewegung des Schlittens 16 umgesetzt wird, ermittelt. Aus dieser Drehstellung wiederum läßt sich dann die absolute Schlittenposition ermitteln. Es kann aber auch vorgesehen sein, daß der Schlitten mit seiner Linearbewegung selber ein drehbares Element antreibt, aus dessen Drehstellung die Schlittenposition absolut bestimmt wird.

Ein solches absolutes Winkelmeßsystem kann wiederum eine Gebereinrichtung und eine Sensoreinrichtung umfassen, wobei wiederum wie oben beschrieben die Gebereinrichtung stationär an dem Maschinengehäuse angeordnet sein kann oder die Sensoreinrichtung. Beispielsweise handelt es sich bei einem Geber um ein Magnetband wie oben beschrieben und der Sensor ist dann ein magnetfeldsensitiver Sensor wie ein Hall-Sensor, um eben die Winkelstellung auszulesen.

Es kann aber auch vorgesehen sein, daß der Sensor ein stationär bezüglich des Maschinengehäuses 12 angeordneter Sensor ist, während der Geber ein mit dem Antriebselement rotierender Magnet ist. Es wird auf die DE 100 25 661 A1 Bezug genommen.

Zur Erfassung von Kenngrößen der Schlittenbewegung und insbesondere der Geschwindigkeit des Schlittens 16 im Servobetriebsmodus kann auch eine Inkrementalzählvorrichtung vorgesehen sein, welche die Schlittenposition nicht absolut ermittelt, sondern gegenüber einem Referenzpunkt, der als Startpunkt für eine Zählung wirkt.

Erfindungsgemäß erfolgt im Servobetriebsmodus die Unterstützung der Schlittenbewegung durch den Antriebsmotor 20 in Abhängigkeit mindestens einer Kenngröße der Schlittenbewegung, wobei zur Bewegung des Schlittens 16 die Unterstützung insbesondere abhängig ist von der Größe der Geschwindigkeit des Schlittens 16. Die Motorbestromung I ist damit abhängig von der Geschwindigkeit v des Schlittens. Die Geschwindigkeit v des Schlittens wird über die Wegmeßvorrichtung 32 ermittelt. Die Motorbestromung bestimmt das Motormoment (Drehmoment), welches der Antriebsmotor 20 auf den Schlitten 16 ausübt.

Die Unterstützung der Schlittenbewegung erfolgt über ein Unterstützungsprofil 54, welches beispielsweise in Tabellenform oder als Funktion in der Steuerungs- und Regelungsvorrichtung 52 gespeichert ist. Das Unterstützungsprofil 54 ist vorgegeben und im Servobetriebsmodus wird der Antriebsmotor gemäß dem Unterstützungsprofil gesteuert bzw. geregelt.

Es kann vorgesehen sein, daß das Unterstützungsprofil 54 selber durch den Bediener einstellbar ist, wobei dann verschiedene Unterstützungsprofile in der Steuerungs- und Regelungsvorrichtung 52 abgespeichert sind. Beispielsweise kann ein spezielles Unterstützungsprofil in Abhängigkeit vom Schneidgut gewählt werden und/oder in Abhängigkeit von der Bedienungsperson. So ist bei harten Wurstsorten grundsätzlich eine höhere Kraft für die Bewegung des Schlittens 16 beim Schneidevorgang aufzuwenden, als beispielsweise für weiche Wurstsorten oder für Käse. Dementsprechend kann ein Unterstützungsprofil vorgesehen sein, welches an harte Wurstsorten angepaßt ist und ein Unterstützungsprofil, welches an weiche Wurstsorten oder Käse angepaßt ist. Bedienerabhängige Unterstützungsprofile können berücksichtigen, ob der Bediener den Schlitten 16 im Servobetriebsmodus eher kraftvoll bewegen will oder mit größerer Unterstützung.

Es können verschiedene Formen von Unterstützungsprofilen beispielsweise in Tabellenform hinterlegt sein, wobei sich diese Unterstützungsprofile in nichtproportionaler Weise unterscheiden. Es kann auch vorgesehen sein, daß für eine Form eines Unterstützungsprofils ein Basis-Unterstützungsprofil beispielsweise in Form einer Tabelle hinterlegt ist. Ausgehend von diesem Basis-Unterstützungsprofil lassen sich proportionale Unterstützungsprofile durch Multiplikation mit einem festen Faktor generieren. Dieser Faktor ist insbesondere einstellbar. Dadurch läßt sich dann die Stärke der Unterstützung einstellen.

Das Unterstützungsprofil 54 weist in einem Fahrprofil 55 einen Anfahrbereich 56, einen Mittelbereich 58 und einen Begrenzungsbereich 60 auf.

Der Anfahrbereich 56 liegt bei kleinen Geschwindigkeiten von der Geschwindigkeit Null ausgehend. In diesem Bereich ist die Steigung des Unterstützungsprofils bezüglich der Geschwindigkeit v als Kenngröße der Schlittenbewegung am größten. Dort ist bei dem nicht-linearen Unterstützungsprofil 54 die relative Änderung der Motorbestromung und damit des Motormoments (und damit wiederum der Unterstützung der Schlittenbewegung) am größten, das heißt das Motormoment ist hier überproportional. Dies bewirkt beim Anfahren des Schlittens 16 durch manuelle Bedienung eine stärkere Unterstützung für den Bediener. Dem Bediener wird dadurch das Gefühl gegeben, daß der Schlitten leichtgängig ist.

Weiterhin ist dadurch sichergestellt, daß der Schlitten 16 durch einen kurzen Anstoß nicht von selbst anfängt zu verfahren. Dies wird auch noch dadurch unterstützt, daß das Unterstützungsprofil im Anfahrbereich 56 nicht bei der Geschwindigkeit Null beginnt, sondern bei einer endlichen Geschwindigkeit 62, welche dicht bei Null liegt.

Durch die Ausbildung des Unterstützungsprofils 54 im Anfahrbereich 56 mit steiler Kennlinie wird für den Schlitten 16 ein sanftes und ruckfreies Losfahren erreicht.

In dem Mittelbereich 58 bei mittleren Geschwindigkeiten verläuft das Unterstützungsprofil 54 flacher als im Anfahrbereich 56. Es kann dabei vorgesehen sein, daß das Unterstützungsprofil im Mittelbereich 58 zumindest näherungsweise linear ist.

Im Begrenzungsbereich 60 verläuft die Motorbestromung (und damit das Motormoment) noch flacher als im Mittelbereich 58, wobei dort die Motorbestromung insbesondere im wesentlichen konstant ist. Dies bedeutet, daß in diesem Geschwindigkeitsbereich die Motorbestromung begrenzt ist und damit auch die Geschwindigkeit des Schlittens 16 begrenzt ist. Es wird dadurch verhindert, daß zu hohe Geschwindigkeiten für den Schlitten 16 erreicht werden, das heißt die Geschwindigkeit des Schlittens 16 wird über die Ausgestaltung des Unterstützungsprofils 54 im Begrenzungsbereich 60 begrenzt.

Durch die Gestalt des Unterstützungsprofils 54 wird dem Bediener ein natürliches Gefühl beim Schieben des Schlittens 16 gegeben; der Bediener hat das Gefühl, daß der Schlitten 16 leichtgängig ist - im Servobetriebsmodus wird die manuelle Bedienung des Schlittens 16 durch den Antriebsmotor 20 geschwindigkeitsabhängig gemäß dem Unterstützungsprofil 54 gesteuert bzw. geregelt.

Es kann grundsätzlich vorgesehen sein, daß die Stärke der Unterstützung einstellbar ist, indem unterschiedliche Unterstützungsprofile 54 auswählbar sind bzw. an einem Unterstützungsprofil die Steilheit insbesondere in dem Anfahrbereich 56 und in dem Mittelbereich 58 einstellbar ist. Dies kann wie oben beschrieben durch Einstellung eines Faktors ausgehend von einem Basis-Unterstützungsprofil erfolgen.

Es kann auch vorgesehen sein, daß als Kenngröße nicht die Geschwindigkeit des Schlittens 16 gewählt wird, sondern die Beschleunigung des Schlittens 16. Es ist auch möglich, gemeinsam die Geschwindigkeit und die Beschleunigung als Kenngrößen zu verwenden.

Es kann auch vorgesehen sein, daß in einem Lernmodus (Teach-In-Modus) ein Unterstützungsprofil einstellbar ist, indem ein Bediener den Schlitten 16 bewegt und aus dieser Bewegung dann ein Unterstützungsprofil ermittelt wird, welches dann wiederum gespeichert wird.

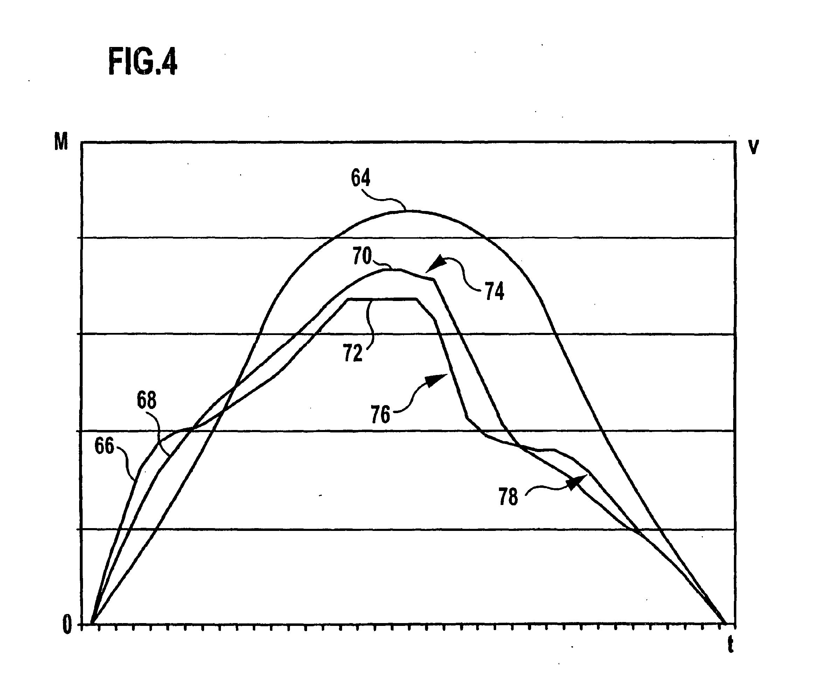

In Figur 4 ist ein Geschwindigkeitsverlauf 64 über der Zeit t und der zeitliche Verlauf des Motormoments 66 gezeigt, welches sich einstellt, wenn der Antriebsmotor 20 gemäß dem Unterstützungsprofil 54 gesteuert bzw. geregelt wird. Ferner gezeigt ist die Geschwindigkeit 68 des Schlittens 16, die sich dann einstellt, wenn der Antriebsmotor 20 das Motormoment 66 aufweist.

Man erkennt wiederum bei kleinen Geschwindigkeiten einen steilen Anfahrbereich mit überproportional großem Motormoment, wobei dann im Begrenzungsbereich die Geschwindigkeit auf einen maximalen Wert 70 begrenzt ist. Dort ist dann auch das Motormoment 72 im wesentlichen konstant. Die Unterstützung der Schlittenbewegung ist also für das maximale Motormoment 72 begrenzt.

Erfindungsgemäß ist ferner ein Bremsassistent vorgesehen, welcher dann wirkt, wenn sich die Geschwindigkeit des Schlittens 16 verringert, das heißt eine negative Beschleunigung wirkt, bzw. eine manuelle Bremskraft auf den Schlitten 16 ausgeübt wird, die auch eine negative Beschleunigung bewirkt. Der Bremsassistent wird aktiviert, wenn eine Verringerung der Geschwindigkeit des Schlittens 16 detektiert wird. Es wird dann durch den Antriebsmotor ein überproportionales Bremsmoment erzeugt. Dies ist in Figur 4 erkennbar:

Wenn sich die Geschwindigkeit verringert, wie im Bereich 74, dann nimmt das Motormoment im Bereich 76 und 78 stark und insbesondere überproportional ab, was zu einer überproportionalen Verringerung der Geschwindigkeit des Schlittens 16 führt. Dadurch wiederum wird ein erhöhtes Bremsmoment erzeugt, das heißt der Schlitten 16 wird durch einen Bremsassistenten abgebremst.

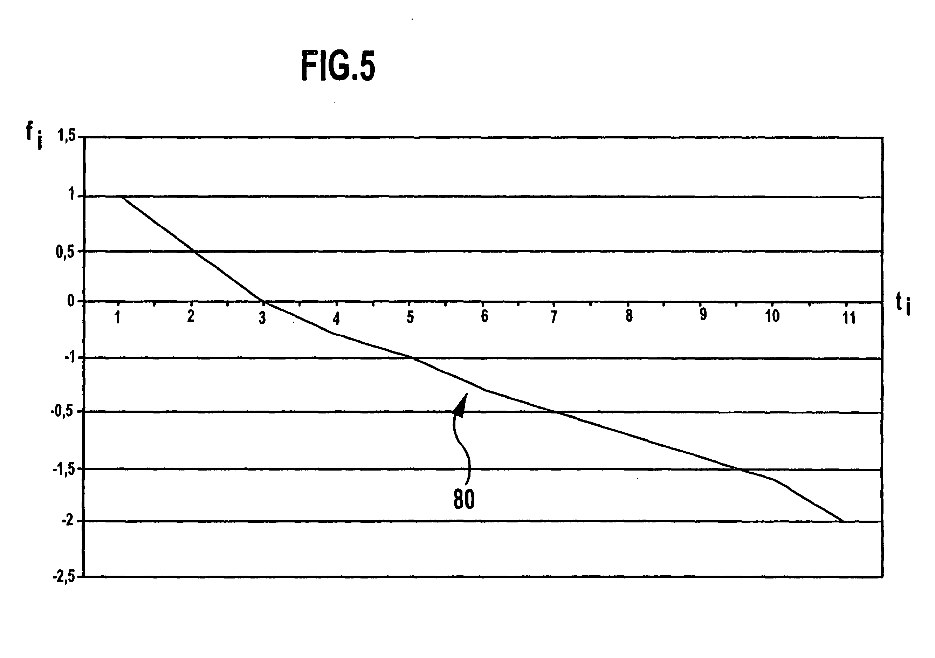

Der Bremsassistent ist über eine Bremsassistent-Kennlinie 80 (Bremsfunktion) realisierbar, wie sie beispielhaft in Figur 5 gezeigt ist. Die Bremsassistent-Kennlinie 80 umfaßt in einem Zeitraster t₁ bis t₁₁ vorgegebene Bremsfaktoren fᵢ, welche beispielsweise als diskrete Werte in Tabellenform in der Steuerungsund Regelungsvorrichtung 52 gespeichert sind. Wenn durch die Steuerungsund Regelungsvorrichtung 52 eine Verlangsamung der Geschwindigkeit des Schlittens 16, das heißt eine negative Beschleunigung, erkannt wird, dann wird diese Bremsfunktion aktiviert.

Gemäß dem Unterstützungsprofil 54 ist jeder Geschwindigkeit v des Schlittens 16 ein bestimmter Motormomentwert zugeordnet. Die Bremsassistent-Kennlinie 80 umfaßt Faktoren fᵢ zur Modifikation des Motormomentwertes, welcher sich bei einer vorgegebenen Geschwindigkeit gemäß Unterstützungsprofil 56 ergibt. Ausgehend von der Zeit t₁ mit dem Bremsfaktor f₁ = 1, bei der der Motormomentwert gemäß Unterstützungsprofil 54 vorliegt, wird dann innerhalb des Zeitrasters t₁ bis t₁₁, welches beispielsweise eine Länge von 10 ms hat, eine Reihe von Bremsfaktoren f₂ bis f₁₁ in zeitlich festen Abständen Δt = tᵢ₊₁-tᵢ durchgefahren. Durch einen Bremsfaktor kleiner Eins wird das Drehmoment verringert, wobei bei negativen Bremsfaktoren ein negatives Drehmoment erzeugt wird, welches eine Gegenkraft ausübt, um so eine Bremskraft zu bewirken. Wenn ein Bremsfaktor fᵢ ungleich Eins wirkt, dann übt der Antriebsmotor 20 ein Motormoment aus, welches von dem Unterstützungsprofil 56 abweicht. Es stellt sich dann eine neue Geschwindigkeit ein. An dem folgenden Zeitpunkt tᵢ₊₁ wird gemäß dem dann vorgegebenen Bremsfaktor fᵢ₊₁ ein neues Motormoment eingestellt, welches wiederum zu einer neuen Geschwindigkeit führt.

Die Bremsassistent-Kennlinie 80 mit ihrem Bremsfaktoren fᵢ ist so gewählt, daß eben eine Abbremsung insbesondere bis auf die Geschwindigkeit Null erreicht wird. Vorzugsweise nehmen dazu innerhalb des Zeitrasters t₁ bis t₁₁ die Bremsfaktoren ausgehend von dem Wert Eins ab und werden negativ. Durch die negativen Bremsfaktoren (in Figur 5 f₅ bis f₁₁) innerhalb des Zeitrasters wird ein - kurzzeitiges - Bremsmotormoment erzeugt, welches bei dem in Figur 5 gezeigten Ausführungsbeispiel einer Bremsassistent-Kennlinie über einen Zeitraum wirkt, welcher kürzer ist als das Zeitraster. In dem gezeigten Ausführungsbeispiel wirkt ein negatives Motormoment (Bremsmoment) über einen Zeitraum von 8 ms.

Die Geschwindigkeit des Schlittens 16, welche sich während der Abarbeitung der Bremsfunktion 80 bei aktiviertem Bremsassistenten einstellt, wird durch die Kennlinie selber bestimmt, wobei die tatsächlich erreichte Geschwindigkeit auch durch die Beladung des Schlittens 16, die Stärke der Bremsimpulse und die Ausgangsgeschwindigkeit des Schlittens 16 beeinflußt wird.

Es kann vorkommen, daß bei aktiviertem Bremsassistenten, während der Abarbeitung der Bremsassistent-Kennlinie 80, sich die Geschwindigkeit des Schlittens 16 wieder erhöht, indem ein Bediener eine Gegenkraft ausübt. Es ist dann vorgesehen, daß die Bremsassistent-Kennlinie 80 nicht bis zum Ende mit kleiner werdenden Bremsfaktoren fᵢ durchlaufen wird, sondern in Gegenrichtung - zu höheren Bremsfaktoren fᵢ - durchlaufen wird. Dadurch läßt sich ein sanfter Übergang zwischen Abbremsung und normaler Schlittenbewegung erreichen. Vorzugsweise wird die Bremsassistent-Kennlinie 80 in der Gegenrichtung mit kleineren Zeitintervallen durchlaufen als bei dem Durchlaufen zur Abbremsung des Schlittens 16. Dies unterstützt ebenfalls den sanften Übergang zwischen Abbremsung und normaler Bewegung des Schlittens 16.

Der Bremsassistent umfaßt auch die Sicherheitsfunktion, daß der Schlitten 16 nach Anstoßen von selber hält, da der Schlitten 16, wenn nicht weiter von Hand nachgeführt wird, an Geschwindigkeit verliert und damit auch der Bremsassistent aktiviert wird.

Es kann eine Sicherheitsfunktion realisiert sein, bei der der Schlitten 16 automatisch abgebremst wird, wenn er nach Erreichen des hinteren Umkehrpunktes einer Schlittenführung, welcher von dem Bediener abgewandt ist, innerhalb eines vorgegebenen Zeitraums den anderen, vorderen Umkehrpunkt der Schlittenführung erreicht. Bei der Darstellung gemäß Figur 1 bewegt sich der Schlitten senkrecht zur Zeichenebene, wobei der vordere Umkehrpunkt nach vorne liegt und der hintere Umkehrpunkt nach hinten.

Der hintere Umkehrpunkt muß zur Komplettierung eines Schnitts an einem Schneidgut stets erreicht werden. Nach Erreichen des Umkehrpunktes bewegt der Bediener den Schlitten 16 in die Gegenrichtung zu dem anderen Umkehrpunkt hin. Außer bei sehr breitem Schneidgut wird in der Regel der vordere Umkehrpunkt nicht erreicht, da ein Bediener, um eine höhere Taktzahl zu erreichen, nicht die volle Strecke zwischen dem hinteren Umkehrpunkt und dem vorderen Umkehrpunkt zurückfährt, sondern den Schlittenhub verkürzt.

Wenn geprüft wird, ob der Schlitten 16 den vorderen Umkehrpunkt erreicht (nachdem er den hinteren Umkehrpunkt erreicht hat) und dann noch geprüft wird, in welcher Zeit er den vorderen Umkehrpunkt ausgehend von dem hinteren Umkehrpunkt erreicht hat, dann läßt sich ein unkontrolliertes Durchlaufen des Schlittens 16 auf seiner Führungsbahn verhindern. Der Schlitten wird automatisch abgebremst, wenn er innerhalb des vorgegebenen Zeitraums, das heißt unterhalb einer vorgegebenen Grenzzeit, ausgehend von dem hinteren Umkehrpunkt den vorderen Umkehrpunkt erreicht. Wird die Zeitgrenze überschritten, dann erfolgt keine automatische Abbremsung.

Die Abbremsung kann beispielsweise über einen Bremsimpuls des Antriebsmotors 20 erfolgen. Durch ein solches Bremsmoment wird der Schlitten 16 automatisch angehalten. Dadurch wird ein Durchlaufen und insbesondere eine unkontrollierte Hin- und Herbewegung auf der Führungsbahn des Schlittens 16 verhindert.

Die Grenzzeit, bei deren Unterschreitung der Schlitten 16 automatisch abgebremst wird, kann in der Steuerungs- und Regelungsvorrichtung 52 fest abgespeichert sein oder durch diese ausgehend von aktuellen Parametern der Aufschnitt-Schneidemaschine 12 berechnet werden. Die Stärke und Länge des Bremsimpulses zur Abbremsung des Schlittens 16 kann abgespeichert sein oder auch ausgehend von aktuellen Geräteparametern berechnet werden.

Bei dem erfindungsgemäßen Verfahren wird eine variable, nicht-lineare Unterstützung der Schlittenbewegung im Servobetriebsmodus erreicht, so daß sich ein leichtes und ruckfreies Anfahren des Schlittens 16 erreichen läßt bei leichtgängiger Schlittenführung; der Bediener hat ein natürliches Gefühl beim Schieben des Schlittens 16.

Es kann zusätzlich ein Bremsassistent vorgesehen sein, welcher bei einer Verlangsamung des Schlittens 16 ein überproportionales Bremsmoment erzeugt, so daß beispielsweise bei leichtem Gegenziehen mit wenig Kraftaufwand der Schlitten 16 abgebremst wird und eine schnelle Richtungsumkehr erreicht wird. Darüber hinaus wird die Sicherheit erhöht, da nach Anstoßen des Schlittens 16 dieser dann automatisch anhält.

## Patentansprüche

1. Aufschnitt-Schneidemaschine mit einem Kreismesser (30), einem Schlitten (16) zur Aufnahme von Schneidgut, welcher parallel zur Schneidebene des Kreismessers (30) verschieblich geführt ist, und einem Antriebsmotor (20) zur Verschiebung des Schlittens (16), wobei in einem Servobetriebsmodus der Schlitten (16) manuell bedienbar ist und die Bedienung durch den Antriebsmotor (20) unterstützt ist,
**dadurch gekennzeichnet, dass** im Servobetriebsmodus die Unterstützung durch den Antriebsmotor (20) abhängig ist von der Geschwindigkeit (v) und/oder von der Beschleunigung des Schlittens (16) als Kenngröße der Schlittenbewegung, und daß ein Sensor (32) zur Messung der mindestens einen Kenngröße der Schlittenbewegung vorgesehen ist.

2. Aufschnitt-Schneidemaschine nach Anspruch 1, **dadurch gekennzeichnet, daß** ein Motormoment (M) des Antriebsmotors (20) in Abhängigkeit der mindestens einen Kenngröße der Schlittenbewegung gesteuert und/oder geregelt ist.

3. Aufschnitt-Schneidemaschine nach einem der vorangehenden Ansprüche,
**dadurch gekennzeichnet, daß** eine Steuerungs- und Regelungsvorrichtung (52) zur Steuerung und/oder Regelung des Antriebsmotors (20) vorgesehen ist.

4. Aufschnitt-Schneidemaschine nach einem der vorangehenden Ansprüche,
**dadurch gekennzeichnet, daß** der Antriebsmotor (20) gemäß einem vorgegebenen Unterstützungsprofil (54) steuerbar und/oder regelbar ist.

5. Aufschnitt-Schneidemaschine nach Anspruch 4, **dadurch gekennzeichnet, daß** das Unterstützungsprofil (54) ein Fahrprofil (55) für den Schlitten (16) umfaßt.

6. Aufschnitt-Schneidemaschine nach einem der vorangehenden Ansprüche,
**dadurch gekennzeichnet, daß** die Unterstützung der Schlittenbewegung im Servobetriebsmodus nicht-linear bezüglich der mindestens einen Kenngröße der Schlittenbewegung ist.

7. Aufschnitt-Schneidemaschine nach Anspruch 6, **dadurch gekennzeichnet, daß** die Unterstützung der Schlittenbewegung bei kleinen Geschwindigkeiten des Schlittens (16) überproportional stärker ist als bei großen Geschwindigkeiten des Schlittens (16).

8. Aufschnitt-Schneidemaschine nach einem der Ansprüche 5 bis 7, **dadurch gekennzeichnet, daß** das Fahrprofil (55) einen Anfahrbereich (56) für kleine Geschwindigkeiten, einen Mittelbereich (58) für mittlere Geschwindigkeiten, und einen Begrenzungsbereich (60) für hohe Geschwindigkeiten aufweist.

9. Aufschnitt-Schneidemaschine nach Anspruch 8, **dadurch gekennzeichnet, daß** im Anfahrbereich (56) das Fahrprofil (55) bezüglich der mindestens einen Kenngröße der Schlittenbewegung am steilsten ist.

10. Aufschnitt-Schneidemaschine nach Anspruch 8 oder 9, **dadurch gekennzeichnet, daß** im Begrenzungsbereich (60) das Fahrprofil (55) bezüglich der mindestens einen Kenngröße der Schlittenbewegung am flachsten ist.

11. Aufschnitt-Schneidemaschine nach einem der Ansprüche 8 bis 10,
**dadurch gekennzeichnet, daß** die Steigung im Fahrprofil (55) im Mittelbereich (58) zwischen der Steigung im Anfahrbereich (56) und der Steigung im Begrenzungsbereich (60) liegt.

12. Aufschnitt-Schneidemaschine nach einem der vorangehenden Ansprüche,
**dadurch gekennzeichnet, daß** das Motormoment (M) auf einen maximalen Wert begrenzt ist.

13. Aufschnitt-Schneidemaschine nach einem der vorangehenden Ansprüche,
**dadurch gekennzeichnet, daß** die Stärke der Unterstützung einstellbar ist.

14. Aufschnitt-Schneidemaschine nach einem der Ansprüche 4 bis 13,
**dadurch gekennzeichnet, daß** das Unterstützungsprofil (54) einstellbar ist.

15. Aufschnitt-Schneidemaschine nach einem der Ansprüche 4 bis 14,
**dadurch gekennzeichnet, daß** in einem Lernmodus durch Vorgabe der Schlittenbewegung ein Unterstützungsprofil erzeugbar ist.

16. Aufschnitt-Schneidemaschine nach einem der vorangehenden Ansprüche,
**dadurch gekennzeichnet, daß** bei Verlangsamung der Schlittenbewegung und/oder manueller Bremsung des Schlittens (16) ein Bremassistent aktivierbar ist.

17. Aufschnitt-Schneidemaschine nach Anspruch 16, **dadurch gekennzeichnet, daß** der Bremsassistent bei einer negativen Beschleunigung des Schlittens (16) aktiviert wird.

18. Aufschnitt-Schneidemaschine nach Anspruch 16 oder 17, **dadurch gekennzeichnet, daß** bei aktiviertem Bremsassistenten ein Motormomentwert, welcher sich gemäß einem Unterstützungsprofil (54) ergibt, modifiziert wird.

19. Aufschnitt-Schneidemaschine nach Anspruch 18, **dadurch gekennzeichnet, daß** der Motormomentwert, welcher sich für eine vorgegebene Geschwindigkeit gemäß dem Unterstützungsprofil (54) ergibt, mit einem Bremsfaktor (fᵢ) multipliziert wird.

20. Aufschnitt-Schneidemaschine nach Anspruch 19, **dadurch gekennzeichnet, daß** der Bremsfaktor (fᵢ) kleiner Eins ist.

21. Aufschnitt-Schneidemaschine nach Anspruch 19 oder 20, **dadurch gekennzeichnet, daß** innerhalb eines vorgegebenen Zeitrasters eine Reihe von Bremsfaktoren (fₗ) vorgegeben sind.

22. Aufschnitt-Schneidemaschine nach Anspruch 21, **dadurch gekennzeichnet, daß** die Reihe negative Bremsfaktoren umfaßt.

23. Aufschnitt-Schneidemaschine nach einem der Ansprüche 16 bis 22,
**dadurch gekennzeichnet, daß** bei aktiviertem Bremsassistenten die Bestromung des Antriebsmotors (20) überproportional zurückgenommen wird und/oder ein überhöhtes Bremsmoment erzeugt wird.

24. Aufschnitt-Schneidemaschine nach einem der vorangehenden Ansprüche,
**dadurch gekennzeichnet, daß** der Schlitten (16) abgebremst wird, wenn er nach Erreichen des vom Bediener abgewandten Umkehrpunktes einer Schlittenführung den anderen Umkehrpunkt innerhalb eines vorgegebenen Zeitraums erreicht.

25. Aufschnitt-Schneidemaschine nach Anspruch 24, **dadurch gekennzeichnet, daß** der vorgegebene Zeitraum so bemessen ist, daß Zeiten innerhalb des Zeitraums einem unkontrollierten Durchlaufen des Schlittens (16) zwischen den Umkehrpunkten entsprechen.

26. Aufschnitt-Schneidemaschine nach einem der vorangehenden Ansprüche, **gekennzeichnet durch** einen Automatikbetriebsmodus, bei welchem sich der Schlitten (16) automatisch hin- und her bewegt.

27. Aufschnitt-Schneidemaschine nach einem der vorangehenden Ansprüche, **gekennzeichnet durch** einen Manuellbetriebsmodus, bei dem der Schlitten (16) rein manuell beweglich ist.

28. Aufschnitt-Schneidemaschine nach einem der vorangehenden Ansprüche,
**dadurch gekennzeichnet, daß** eine Wegmeßvorrichtung (32) vorgesehen ist, über welche jede Position des Schlittens (16) längs seiner Führungsbahn zu jedem Zeitpunkt mindestens während des Betriebs der Aufschnitt-Schneidemaschine absolut ermittelbar ist.

29. Verfahren zum Betreiben einer Aufschnitt-Schneidemaschine in einem Servobetriebsmodus, mit einem Schlitten zur Aufnahme von Schneidgut, welcher parallel zur Schneidebene eines Kreismessers hin- und her verschieblich ist, wobei in dem Servobetriebsmodus die Schlittenbewegung manuell bedienbar ist und durch einen Antriebsmotor unterstützt wird, **dadurch gekennzeichnet, daß** die Geschwindigkeit und/oder Beschleunigung des Schlittens als Kenngröße der Schlittenbewegung durch einen Sensor gemessen wird und daß die Unterstützung der Schlittenbewegung abhängig von der mindestens einen Kenngröße ist.

30. Verfahren nach Anspruch 29, **dadurch gekennzeichnet, daß** der Antriebsmotor für den Schlitten gemäß einem Unterstützungsprofil gesteuert und/oder geregelt wird.

31. Verfahren nach Anspruch 30, **dadurch gekennzeichnet, daß** das Unterstützungsprofil ein Fahrprofil aufweist.

32. Verfahren nach einem der Ansprüche 29 bis 31, **dadurch gekennzeichnet, daß** die Unterstützung bei kleinen Geschwindigkeiten des Schlittens überproportional stärker ist als bei größeren Geschwindigkeiten des Schlittens.

33. Verfahren nach einem der Ansprüche 29 bis 32, **dadurch gekennzeichnet, daß** bei Verlangsamung des Schlittens und/oder bei Ausübung einer Bremskraft auf den Schlitten ein Bremsassistent aktiviert wird.

34. Verfahren nach Anspruch 33, **dadurch gekennzeichnet, daß** bei aktiviertem Bremsassistenten zu vorgegebenen Zeitpunkten ein gemäß einem Unterstützungsprofil bei einer bestimmten Geschwindigkeit des Schlittens vorgegebenes Motormoment modifiziert wird.

35. Verfahren nach Anspruch 34, **dadurch gekennzeichnet, daß** das gemäß Unterstützungsprofil vorgegebene Drehmoment mit einem Bremsfaktor kleiner Eins multipliziert wird, um das tatsächliche Drehmoment zu bestimmen.

36. Verfahren nach Anspruch 34 oder 35, **dadurch gekennzeichnet, daß** in einem vorgegebenen Zeitraster eine Reihe von Bremsfaktoren vorgegeben werden.

37. Verfahren nach Anspruch 36, **dadurch gekennzeichnet, daß** im Zeitraster zu größeren Zeiten hin die Bremsfaktoren kleiner werden.

38. Verfahren nach Anspruch 36 oder 37, **dadurch gekennzeichnet, daß** zu größeren Zeiten hin negative Bremsfaktoren vorgegeben werden.

39. Verfahren nach einem der Ansprüche 33 bis 38, **dadurch gekennzeichnet, daß** bei Erhöhung der Geschwindigkeit des Schlittens bei aktiviertem Bremsassistenten eine Bremsassistent-Kennlinie in Richtung höherer Motormomente des Antriebsmotors durchlaufen wird.

40. Verfahren nach Anspruch 39, **dadurch gekennzeichnet, daß** Zeitintervalle zum Durchlaufen der Bremsassistent-Kennlinie kleiner gewählt werden als bei der Bremsung des Schlittens.

41. Verfahren nach einem der Ansprüche 29 bis 40, **dadurch gekennzeichnet, daß** der Schlitten abgebremst wird, wenn er nach Erreichen des vom Bediener abgewandten Umkehrpunktes den anderen Umkehrpunkt innerhalb eines vorgegebenen Zeitraums erreicht.

42. Verfahren nach Anspruch 41, **dadurch gekennzeichnet, daß** der vorgegebene Zeitraum so gewählt wird, daß Zeiten innerhalb des Zeitraums einem unkontrollierten Durchlaufen des Schlittens zwischen den Umkehrpunkten entsprechen.

## Claims

1. Food product slicing machine having a circular knife (30), a carriage (16) for accommodating the product to be cut, which is guided for displacement parallel to the cutting plane of the circular knife (30), and a drive motor (20) for displacement of the carriage (16), the carriage (16) being operable manually and the operation being assisted by the drive motor (20) in a servo operating mode,
**characterized in that** in the servo operating mode the assistance by the drive motor (20) is dependent upon the speed (v) and/or upon the acceleration of the carriage (16) as parameter of the carriage movement, and **in that** a sensor (32) is provided for measuring the at least one parameter of the carriage movement.

2. Food product slicing machine in accordance with claim 1, **characterized in that** a motor torque (M) of the drive motor (20) is controlled in dependence upon the at least one parameter of the carriage movement.

3. Food product slicing machine in accordance with any one of the preceding claims, **characterized in that** a control device (52) is provided for controlling the drive motor (20).

4. Food product slicing machine in accordance with any one of the preceding claims, **characterized in that** the drive motor (20) is controllable in accordance with a specified assistance profile (54).

5. Food product slicing machine in accordance with claim 4, **characterized in that** the assistance profile (54) comprises a travel profile (55) for the carriage (16).

6. Food product slicing machine in accordance with any one of the preceding claims, **characterized in that** the assistance for the carriage movement in the servo operating mode is non-linear with respect to the at least one parameter of the carriage movement.

7. Food product slicing machine in accordance with claim 6, **characterized in that** the assistance for the carriage movement is overproportionally greater at low speeds of the carriage (16) than at high speeds of the carriage (16).

8. Food product slicing machine in accordance with any one of claims 5 to 7, **characterized in that** the travel profile (55) has a start-up range (56) for low speeds, a middle range (58) for medium speeds, and a limit range (60) for high speeds.

9. Food product slicing machine in accordance with claim 8, **characterized in that** in the start-up range (56) the travel profile (55) is the steepest with respect to the at least one parameter of the carriage movement.

10. Food product slicing machine in accordance with claim 8 or 9,
**characterized in that** in the limit range (60) the travel profile (55) is the flattest with respect to the at least one parameter of the carriage movement.

11. Food product slicing machine in accordance with any one of claims 8 to 10, **characterized in that** the gradient in the travel profile (55) in the middle range (58) is between the gradient in the start-up range (56) and the gradient in the limit range (60).

12. Food product slicing machine in accordance with any one of the preceding claims, **characterized in that** the motor torque (M) is limited to a maximum value.

13. Food product slicing machine in accordance with any one of the preceding claims, **characterized in that** the intensity of the assistance is adjustable.

14. Food product slicing machine in accordance with any one of claims 4 to 13, **characterized in that** the assistance profile (54) is adjustable.

15. Food product slicing machine in accordance with any one of claims 4 to 14, **characterized in that** an assistance profile can be generated in a learning mode by specifying the carriage movement.

16. Food product slicing machine in accordance with any one of the preceding claims, **characterized in that** a braking assistant is activatable when the carriage movement slows down and/or the carriage (16) is braked manually.

17. Food product slicing machine in accordance with claim 16,
**characterized in that** the braking assistant is activated in the case of a negative acceleration of the carriage (16).

18. Food product slicing machine in accordance with claim 16 or 17,
**characterized in that** a motor torque value obtained in accordance with an assistance profile (54) is modified when the braking assistant is activated.

19. Food product slicing machine in accordance with claim 18,
**characterized in that** the motor torque value obtained for a specified speed in accordance with the assistance profile (54) is multiplied by a braking factor (fᵢ).

20. Food product slicing machine in accordance with claim 19,
**characterized in that** the braking factor (fᵢ) is less than one.

21. Food product slicing machine in accordance with claim 19 or 20,
**characterized in that** a series of braking factors (fᵢ) are specified within a given time frame.

22. Food product slicing machine in accordance with claim 21,
**characterized in that** the series comprises negative braking factors.

23. Food product slicing machine in accordance with any one of claims 16 to 22, **characterized in that** the supply of current to the drive motor (20) is reduced overproportionally and/or an excessive braking torque is generated when the braking assistant is activated.

24. Food product slicing machine in accordance with any one of the preceding claims, **characterized in that** the carriage (16) is braked when, after reaching the return point of a carriage guide remote from the operator, it reaches the other return point within a specified period of time.

25. Food product slicing machine in accordance with claim 24,
**characterized in that** the specified period of time is calculated such that times within the period of time correspond to an uncontrolled running of the carriage (16) between the return points.

26. Food product slicing machine in accordance with any one of the preceding claims, **characterized by** an automatic operating mode in which the carriage (16) moves back and forth automatically.

27. Food product slicing machine in accordance with any one of the preceding claims, **characterized by** a manual operating mode in which the carriage (16) is movable solely manually.

28. Food product slicing machine in accordance with any one of the preceding claims, **characterized in that** a displacement measuring device (32) is provided with which each position of the carriage (16) along its guide path can be determined absolutely at any point in time at least during operation of the food product slicing machine.

29. Method for operating in a servo operating mode a food product slicing machine having a carriage for accommodating the product to be cut, which is displaceable back and forth parallel to the cutting plane of a circular knife, the carriage movement being operable manually and assisted by a drive motor in the servo operating mode, **characterized in that** the speed and/or the acceleration of the carriage is measured or are measured as parameter of the carriage movement by a sensor, and **in that** the assistance for the carriage movement is dependent upon the at least one parameter.

30. Method in accordance with claim 29, **characterized in that** the drive motor for the carriage is controlled in accordance with an assistance profile.

31. Method in accordance with claim 30, **characterized in that** the assistance profile has a travel profile.

32. Method in accordance with any one of claims 29 to 31, **characterized in that** the assistance is overproportionally greater at low speeds of the carriage than at higher speeds of the carriage.

33. Method in accordance with any one of claims 29 to 32, **characterized in that** a braking assistant is activated when the carriage slows down and/or when a braking force is exerted on the carriage.

34. Method in accordance with claim 33, **characterized in that** a motor torque specified in accordance with an assistance profile for a certain speed of the carriage is modified at specified points in time when the braking assistant is activated.

35. Method in accordance with claim 34, **characterized in that** the torque specified in accordance with the assistance profile is multiplied by a braking factor of less than one in order to determine the actual torque.

36. Method in accordance with claim 34 or 35, **characterized in that** a series of braking factors are specified in a given time frame.

37. Method in accordance with claim 36, **characterized in that** the braking factors become smaller as the times become longer in the time frame.

38. Method in accordance with claim 36 or 37, **characterized in that** negative braking factors are specified as the times become longer.

39. Method in accordance with any one of claims 33 to 38, **characterized in that** upon increasing the speed of the carriage when the braking assistant is activated, a characteristic curve of the braking assistant is followed in the direction of greater motor torques of the drive motor.

40. Method in accordance with claim 39, **characterized in that** time intervals for following the characteristic curve of the braking assistant are selected so as to be smaller than during the braking of the carriage.

41. Method in accordance with any one of claims 29 to 40, **characterized in that** the carriage is braked when, after reaching the return point remote from the operator, it reaches the other return point within a specified period of time.

42. Method in accordance with claim 41, **characterized in that** the specified period of time is selected such that times within the period of time correspond to an uncontrolled running of the carriage between the return points.

## Revendications

1. Machine à trancher comprenant une lame de coupe circulaire (30), un chariot (16) destiné à recevoir du produit à couper, qui est guidé de manière parallèle au plan de coupe de la lame de coupe circulaire (30), et un moteur d'entraînement (20) pour le coulissement du chariot (16), le chariot (16) pouvant être manipulé manuellement dans un mode de fonctionnement à assistance, et la manipulation étant assistée par le moteur d'entraînement (20),
**caractérisée**
**en ce que** dans le mode de fonctionnement à assistance, l'assistance par le moteur d'entraînement (20) est fonction de la vitesse (v) et/ou de l'accélération du chariot (16), en tant que grandeur caractéristique du mouvement du chariot, et en ce qu'il est prévu un capteur (32) pour la mesure d'au moins une de ces grandeurs caractéristiques.

2. Machine à trancher selon la revendication 1, **caractérisée en ce qu'**un couple moteur (M) du moteur d'entraînement (20) est commandé et/ou régulé en fonction d'au moins ladite grandeur caractéristique du mouvement du chariot.

3. Machine à trancher selon l'une des revendications précédentes, **caractérisée en ce qu'**il est prévu un dispositif de commande et de régulation (52) pour commander et/ou réguler le moteur d'entraînement (20).

4. Machine à trancher selon l'une des revendications précédentes, **caractérisée en ce que** le moteur d'entraînement (20) peut être commandé et/ou régulé conformément à un profil d'assistance (54) prescrit.

5. Machine à trancher selon la revendication 4, **caractérisée en ce que** le profil d'assistance (54) englobe un profil de déplacement (55) pour le chariot (16).

6. Machine à trancher selon l'une des revendications précédentes, **caractérisée en ce que** l'assistance du mouvement du chariot dans le mode de fonctionnement à assistance n'est pas linéaire relativement à ladite une grandeur caractéristique.

7. Machine à trancher selon la revendication 6, **caractérisée en ce que** l'assistance du mouvement du chariot est plus forte de manière plus que proportionnelle aux faibles vitesses du chariot (16) qu'aux vitesses élevées du chariot (16).

8. Machine à trancher selon l'une des revendications 5 à 7, **caractérisée en ce que** le profil de déplacement (55) présente une plage de démarrage (56) pour de faibles vitesses, une plage moyenne (58) pour des vitesses moyennes, et une plage de limitation (60) pour des vitesses élevées.

9. Machine à trancher selon la revendication 8, **caractérisée en ce que** dans la plage de démarrage (56), le profil de déplacement (55) est le plus pentu relativement à ladite grandeur caractéristique du mouvement du chariot.

10. Machine à trancher selon la revendication 8 ou 9, **caractérisée en ce que** dans la plage de limitation (60), le profil de déplacement (55) est le plus plat relativement à ladite grandeur caractéristique du mouvement du chariot.

11. Machine à trancher selon l'une des revendications 8 à 10, **caractérisée en ce que** la pente du profil de déplacement (55) dans la plage moyenne se situe entre la pente dans la plage de démarrage (56) et la pente dans la plage de limitation (60).

12. Machine à trancher selon l'une des revendications précédentes, **caractérisée en ce que** le couple moteur (M) est limité à une valeur maximale.

13. Machine à trancher selon l'une des revendications précédentes, **caractérisée en ce que** l'intensité de l'assistance est réglable.

14. Machine à trancher selon l'une des revendications 4 à 13, **caractérisée en ce que** le profil d'assistance (54) est réglable.

15. Machine à trancher selon l'une des revendications 4 à 14, **caractérisée en ce que** dans un mode d'apprentissage il est possible d'engendrer un profil d'assistance en prédéfinissant le mouvement du chariot.

16. Machine à trancher selon l'une des revendications précédentes, **caractérisée en ce qu'**en cas de ralentissement du mouvement du chariot et/ou du freinage manuel du chariot (16), un assistant de freinage peut être activé.

17. Machine à trancher selon la revendication 16, **caractérisée en ce que** l'assistant de freinage est activé dans le cas d'une accélération négative du chariot (16).

18. Machine à trancher selon la revendication 16 ou 17, **caractérisée en ce que** pour un assistant de freinage activé, une valeur du couple moteur, qui est obtenue conformément à un profil d'assistance (54), est modifiée.

19. Machine à trancher selon la revendication 18, **caractérisée en ce que** la valeur du couple moteur, qui est obtenue pour une vitesse prescrite conformément au profil d'assistance (54), est multipliée par un facteur de freinage (fᵢ) .

20. Machine à trancher selon la revendication 19, **caractérisée en ce que** le facteur de freinage (fᵢ) est inférieur à un.

21. Machine à trancher selon la revendication 19 ou 20, **caractérisée en ce qu'**à l'intérieur d'un système de trame de temps prédéterminé sont prescrits une série de facteurs de freinage (fᵢ).

22. Machine à trancher selon la revendication 21, **caractérisée en ce que** ladite série englobe des facteurs de freinage (fᵢ) négatifs.

23. Machine à trancher selon l'une des revendications 16 à 22, **caractérisée en ce que** dans le cas d'un assistant de freinage activé, l'alimentation en courant du moteur d'entraînement (20) est réduite de manière plus que proportionnelle et/ou il est produit un couple de freinage d'une intensité plus que normalement élevée.

24. Machine à trancher selon l'une des revendications précédentes, **caractérisée en ce que** le chariot (16) est freiné lorsque, après avoir atteint le point d'inversion de sens éloigné de l'utilisateur, d'une glissière de guidage du chariot, il atteint l'autre point d'inversion de sens à l'intérieur d'un intervalle de temps prescrit.

25. Machine à trancher selon la revendication 24, **caractérisée en ce que** l'intervalle de temps prescrit est dimensionné de manière telle, que des temps à l'intérieur de l'intervalle de temps correspondent à un passage de déplacement incontrôlé du chariot (16) entre les points d'inversion de sens.

26. Machine à trancher selon l'une des revendications précédentes, **caractérisée par** un mode de fonctionnement en automatique, pour lequel le chariot (16) se déplace automatiquement en va et vient.

27. Machine à trancher selon l'une des revendications précédentes, **caractérisée par** un mode de fonctionnement en manuel, pour lequel le chariot (16) est mobile de manière purement manuelle.

28. Machine à trancher selon l'une des revendications précédentes, **caractérisée en ce qu'**il est prévu un dispositif de mesure de déplacement (32) par l'intermédiaire duquel il est possible de déterminer de façon absolue chaque position du chariot (16) le long d'une voie de guidage, à chaque instant, au moins pendant le fonctionnement de la machine à trancher.

29. Procédé pour faire fonctionner dans un mode de fonctionnement à assistance, une machine à trancher
comprenant un chariot destiné à recevoir du produit à couper, qui peut coulisser en va et vient parallèlement au plan de coupe d'une lame de coupe circulaire, le mouvement du chariot pouvant, dans un mode de fonctionnement à assistance, être engendré manuellement et être assisté par un moteur d'entraînement, **caractérisé en ce que** la vitesse et/ou l'accélération est mesurée ou sont mesurées par un capteur, en tant que grandeur caractéristique du mouvement du chariot, et **en ce que** l'assistance du mouvement du chariot est fonction de ladite grandeur caractéristique.

30. Procédé selon la revendication 29, **caractérisé en ce que** le moteur d'entraînement pour le chariot est commandé et/ou régulé conformément à un profil d'assistance.

31. Procédé selon la revendication 30, **caractérisé en ce que** le profil d'assistance présente un profil de déplacement.

32. Procédé selon l'une des revendications 29 à 31, **caractérisé en ce que** l'assistance est plus forte de manière plus que proportionnelle aux faibles vitesses qu'aux vitesses élevées du chariot.

33. Procédé selon l'une des revendications 29 à 32, **caractérisé en ce qu'**un assistant de freinage est activé dans le cas d'un ralentissement du chariot et/ou lorsqu'une force de freinage est exercée sur le chariot.

34. Procédé selon la revendication 33, **caractérisé en ce que** dans le cas d'un assistant de freinage activé, on modifie, à des instants prescrits, un couple moteur prescrit conformément à un profil d'assistance pour une vitesse déterminée du chariot.

35. Procédé selon la revendication 34, **caractérisé en ce que** le couple prescrit conformément au profil d'assistance est multiplié par un facteur de freinage inférieur à un, pour déterminer le couple effectif.

36. Procédé selon la revendication 34 ou 35, **caractérisé en ce que** dans un système de trame de temps prédéterminé, on prescrit une série de facteurs de freinage.

37. Procédé selon la revendication 36, **caractérisé en ce que** dans le système de trame de temps les facteurs de freinage deviennent plus petits vers les temps les plus grands.

38. Procédé selon la revendication 36 ou 37, **caractérisé en ce que** l'on prescrit des facteurs de freinage négatifs vers les temps les plus grands.

39. Procédé selon l'une des revendications 33 à 38, **caractérisé en ce que** lors de l'augmentation de la vitesse du chariot, dans le cas d'un assistant de freinage activé, on parcoure une ligne caractéristique d'assistance de freinage en direction des couples moteur plus élevés du moteur d'entraînement.

40. Procédé selon la revendication 39, **caractérisé en ce que** des intervalles de temps pour le parcours de la ligne caractéristique d'assistance de freinage sont choisis plus petits que pour le freinage du chariot.

41. Procédé selon l'une des revendications 29 à 40, **caractérisé en ce que** le chariot est freiné lorsque, après avoir atteint le point d'inversion de sens éloigné de l'utilisateur, il atteint l'autre point d'inversion de sens à l'intérieur d'un intervalle de temps prescrit.

42. Procédé selon la revendication 41, **caractérisé en ce que** l'intervalle de temps prescrit est choisi de manière telle, que des temps à l'intérieur de l'intervalle de temps correspondent à un passage de déplacement incontrôlé du chariot entre les points d'inversion de sens.
